# EUROPÄISCHE PATENTSCHRIFT

(11) **EP 3 968 298 B1**
(45) Veröffentlichungstag und Bekanntmachung des Hinweises auf die Patenterteilung: **25.06.2025**
(21) Anmeldenummer: 21195438.3
(22) Anmeldetag: 08.09.2021
(51) Int. Cl.: G08B 29/14, G06V 20/00, G06V 20/52

(54) **MODELLIERUNG EINER SITUATION**
MODELLING OF A SITUATION
MODÉLISATION D'UNE SITUATION

(30) Priorität: 10.09.2020 AT 507672020
(43) Veröffentlichungstag der Anmeldung: 16.03.2022
(73) Patentinhaber: PKE Holding AG, 1100 Wien (AT)
(72) Erfinder: Koppensteiner, Matthias, 2000 Oberolberndorf (AT)
(74) Vertreter: Burgstaller, Peter

(56) Entgegenhaltungen:
- CN-A- 107 358 191
- US-A1- 2017 372 575
- FREJLICHOWSKI DARIUSZ ET AL: "Application of foreground object patterns analysis for event detection in an innovative video surveillance system", PATTERN ANALYSIS AND APPLICATIONS, SPRINGER, NEW YORK, NY, US, vol. 18, no. 3, 15 August 2014 (2014-08-15), pages 473 - 484, XP035512347, ISSN: 1433-7541, [retrieved on 20140815], DOI: 10.1007/S10044-014-0405-7

## Beschreibung

Nach dem Stand der Technik hat ein erster Bildsensor einen ersten Sensorwirkungsbereich. Der erste Bildsensor erstellt von diesem ersten Sensorwirkungsbereich erste Bildsensordaten in einer zumindest Bilddaten umfassenden Form, welche erste Bildsensordaten in einem nach dem Stand der Technik bekannten Format oder in einer ebenso bekannten Form an nachfolgende Einheiten wie beispielsweise eine Alarmeinheit weitergegeben werden. Der erste Bildsensor kann eine Einheit zur Umwandlung der ersten Bildsensordaten in ein zur Verarbeitung in der Alarmeinheit geeignetes Format oder eine entsprechende Form umfassen, was ebenso einen Stand der Technik zu dieser Offenbarung darstellt und nicht Teil der hier diskutierten Erfindung ist. Das unten beschriebene erfindungsgemäße Verfahren kann lediglich darauf aufbauen.

Die ersten Bildsensordaten beschreiben den Sensorwirkungsbereich des ersten Bildsensors in Form eines Bildes oder in Form eines Videos, welches Bild oder welches Video in Form von Bilddaten verarbeitbar und abspeicherbar ist. Es können aus den Bilddaten unter Anwendung von gängigen Verfahren weitere Daten erstellt werden, welche weitere Daten den Sensorwirkungsbereich oder Eigenschaften des Sensorwirkungsbereiches beschreiben.

Der erste Sensorwirkungsbereich umfasst definitionsgemäß einen ersten Ort.

In der Alarmeinheit können die eingehenden ersten Bildsensordaten - gleichgültig in welchem Format und welcher Form abgespeichert - dahingehend analysiert und klassifiziert werden, ob der erste Bildsensor eine gewöhnliche Situation oder ungewöhnliche Situation aufnimmt oder aufnahm. Es können hier Verfahren nach dem Stand der Technik eingesetzt werden, welche Verfahren nach dem Stand der Technik im Regelfall auf einer Objekterkennung und/oder einer Mustererkennung basieren.

Es ist nach dem Stand der Technik bekannt, dass der erste Bildsensor erste reale Bildsensordaten erstellt. Der erste Bildsensor erstellt beispielsweise ein in Form von Bilddaten abspeicherbares Bild von einem Gebäude oder einem Teilbereich eines Gebäudes oder einem sonstigen abgrenzbaren Bereich.

Es ist nach dem Stand der Technik auch bekannt, dass unter Verwendung von Plänen oder eines Entwurfes oder von Bildern eines Gebäudes oder eines sonstigen abgrenzbaren Bereiches als Eingabedaten zu dem im Folgenden beschriebenen Verfahren ein Modell des Gebäudes oder des Bereiches erstellt wird, wobei im Rahmen der folgenden Offenbarung des erfindungsgemäßen Verfahrens nicht zwischen dem Begriff des Gebäudes und dem Begriff des Bereiches unterschieden wird. Unter Berücksichtigung von ersten Bildsensoreigenschaften des in dem Bereich angeordneten oder auf diesen Bereich gerichteten Bildsensors kann ein solches Modell erstellt werden, welches Modell zumindest den Sensorwirkungsbereich des ersten Bildsensors beschreibt und als Bildsensormodelldaten abspeicherbar ist.

Die Bildsensormodelldaten umfassen zumindest Bilddaten des Modells. Die Bildsensordaten können weitere Daten umfassen, welche weiteren Daten Eigenschaften des Modells beschreiben.

Unter Berücksichtigung des in dem Plan eingetragenen virtuellen ersten Bildsensors und auf Basis der Bildsensormodelldaten können virtuelle Bilddaten erstellt werden, welche virtuellen Bilddaten ein Bild beschreiben, welches Bild ein in einem realen, den Plänen entsprechenden Bereich angeordneter realer erster Bildsensor aufnehmen würde. Dies und auch die oben erwähnte Erstellung des Modells sowie der Bildsensormodelldaten erfolgt zumeist unter Anwendung von Computerprogrammen nach dem Stand der Technik.

DE102015205135A1 offenbart kein Verfahren, bei welchem Verfahren die Sensordaten um virtuelle Objektbewegungsdaten ergänzt oder aus den Sensordaten und den virtuellen Objektbewegungsdaten Simulationsdaten zur Weiterverarbeitung erstellt werden.

DE1012015205135A1 betrifft ein Verfahren zur Bewertung von (zweiten) Daten in Hinblick eines möglichen Automatisierungsgrades. DE1012015205135A1 [029] erwähnt, dass der Automatisierungsgrad abhängig von simulierten Eigenschaften von Objekten ermittelt wird. Es findet sich in DE1012015205135A1 kein Hinweis darauf, dass die (zweiten) Daten um die simulierten oder virtuellen Eigenschaften von Objekten ergänzt werden oder Simulationsdaten aus den (zweiten) Daten und den simulierten oder den virtuellen Eigenschaften der Objekte erstellt werden.

DE10207105903A1 offenbart ein Verfahren zur Erkennung eines Zusammentreffens von zwei Objekten, wobei nach dem Stand der Technik bekannte Verfahren zum Trainieren von neuronalen Netzen angewandt werden. Es findet sich in DE10207105903A1 kein Hinweis auf das Ergänzen der Daten um virtuelle Bewegungsdaten oder die Erstellung von Simulationsdaten aus den Daten und den virtuellen Bewegungsdaten.

DE102019122790A1 betrifft ein Verfahren zur Steuerung eines Roboters. Es findet sich kein Hinweis auf die Generierung einer durch die Simulationsdaten beschriebenen Alarmsituation.

Es findet sich in US10503976 kein Hinweis auf die Generierung einer durch die Simulationsdaten beschriebenen Alarmsituation.

DE102008055932A1 offenbart ein Verfahren, wobei die real mittels eines Sensors erfassten Objektpolygone, welche Objektpolygone erfasste Objekte darstellen, verändert werden, um so die Sensoreigenschaften in Hinblick auf das Erfassen der Objekte zu ermitteln. Das Verfahren ist auf die Modifikation der Parameter der Polygone beschränkt (siehe DE102008055932A1 [0028]). Der Grundsatz der Veränderung der Parameter der Polygone unterscheidet sich fundamental von dem Grundsatz des hier diskutierten Verfahrens, die Sensordaten um virtuelle Objektbewegungsdaten zu ergänzen oder Simulationsdaten aus den Sensordaten und den virtuellen Bewegungsdaten zu erstellen.

Bei Closed-Loop-HIL-System werden Daten hinter einem Bildsensorausgang eingefügt, um so das nachfolgende System zu testen.

DE10047082, welches Dokument als Stand der Technik zu DE102008055932A1 genannt ist, beschreibt ein Simulationssystem einer Längsregelung in Fahrzeugen. Das beschriebene System umfasst eine Umgebungsparameter umfassende Rechnereinheit, welche Rechnereinheit zum Laden einer gespeicherten Situation und zum Starten einer Closed-Loop-Simulation ausgebildet ist. Es ist möglich, in eine virtuelle Umgebung zusätzlich Fahrzeuge mit einem Geschwindigkeitsprofil einzubetten. Es findet sich in diesem Dokument kein Hinweis darauf, dass die Umgebungsparameter als Bildsensordaten zu einem anderen Zeitpunkt als die Bewegungsprofile der Fahrzeuge erstellt werden. US 2017/372575 beschreibt ein Verfahren zur Überprüfung der korrekten Detektion einer Alarmanlage mittels simulierter Objekte in einer Umgebung.

Nach dem Stand der Technik wird die Wirksamkeit eines in einem Bereich installierten und somit real existierenden Bildsensors derart überprüft, dass eine Situation wie beispielsweise eine Bewegung eines Objektes oder einer Person in dem Bereich so gut wie möglich nachgestellt werden, was grundsätzlich ein sehr aufwendiger Vorgang ist. Die so mittels des real existierenden Bildsensors aufgenommenen Bildsensordaten werden an eine Alarmeinheit weitergeleitet, welche Alarmeinheit unter Anwendung von Verfahren nach dem Stand der Technik die nachgestellte Bewegung des Objektes oder der Person als eine gewöhnliche Bewegung oder als eine ungewöhnliche Bewegung klassifiziert und dem entsprechend die Situation umfassend die nachgestellte Bewegung des Objektes oder der Person als ein Alarmereignis bewertet. Es kann so beispielsweise eine Einbruchssituation in ein Gebäude nachgestellt werden und überprüft werden, ob ein mit dem real existierenden Bildsensor gekoppeltes Alarmsystem die Einbruchssituation als eine solche Situation erkennt und gegebenenfalls ein Alarmsignal auslöst.

Jede Aufnahme einer Situation mittels eines Bildsensors unterliegt Störeinflüssen wie beispielsweise und nicht einschränkend unterschiedliche Wetterszenarien. Das oben erwähnte Nachstellen von außergewöhnlichen Situationen ist neben der Aufwendigkeit des Nachstellens der Situation als solche auch mit dem Problem behaftet, dass diese Störeinflüsse nur in einem beschränkten Ausmaß oder gar nicht nachgestellt werden können. Dies ist ein schwerwiegendes Problem, zumal diese Störeinflüsse die Bildsensordaten in einem großen Ausmaß beeinflussen können. Es kann im Wesentlichen der Einfluss von Störeinflüssen bei den nachgestellten Bewegungen nur dann ermittelt werden, wenn der jeweilige Störeinfluss tatsächlich vorliegt. Die Überprüfung des Einflusses von Schneefall auf eine Überwachungskamera im Außenbereich ist somit auf den Winter und das tatsächliche Vorkommen von Schneefall beschränkt. Dies ist für den Fachmann keinesfalls eine zufriedenstellende Situation.

Das Nachstellen der Bewegung des Objektes oder der Person ist weiters davon abhängig, dass der erste Ort, an welchem ersten Ort die Bewegung nachgestellt werden soll, zu dem erforderlichen Zeitpunkt zugänglich ist. Das Nachstellen eines Fluchtversuches aus einer Justizvollzugsanstalt bei Schneefall oder Regen bei gleichzeitigem Nebel während der Nachtstunden ist eine durch Nachstellen der Situation nicht bewältigbare Aufgabe.

Nach dem Stand der Technik ist die Überprüfung von in Alarmsystemen integrierten Bildsensoren in einem Planungsstadium und somit vor beispielsweise der Errichtung eines Gebäudes oder eines Bereiches nicht möglich. Wie oben dargelegt ist es nach dem Stand der Technik in dem Planungsstadium lediglich möglich, ein virtuelles Bildsensormodell auf der Grundlage von errechneten virtuellen Bilddaten zu erstellen. Anhand dieser virtuellen Bilddaten ist die Überprüfung auf die Ausdehnung des Sichtbereiches des Bildsensors - im Folgenden als der erste Bildsensor bezeichnet - beschränkt. Es kann keine Aussage darüber getroffen werden, ob der Bildsensor hinreichend auswertbare Bildsensordaten liefert, sodass eine Situation mittels der nachgeschalteten Alarmeinheit als eine außergewöhnliche Situation wie ein Fahrzeugunfall in einem Parkhaus bei Nebel oder eine gewöhnliche Situation klassifizierbar ist.

Das im Folgenden offenbarte Verfahren stellt sich der Aufgabe, diesen Nachteil nach dem Stand der Technik zu überwinden.

Die im Folgenden diskutierte Erfindung stellt sich die Aufgabe, zu ermittlen, ob ein Alarmsystem eine außergewöhnliche Situation als eine solche Situation erkennt und gegebenenfalls ein Alarmsignal auslöst Es ist Aufgabe des erfindungsgemäßen Verfahrens, eine Möglichkeit zu einer zeitsparenden und effizienten Überprüfung der Wirksamkeit von Bildsensoren bereitzustellen.

Es wird im Rahmen der Diskussion des erfindungsgemäßen Verfahrens nicht zwischen einer Person oder einem Objekt unterschieden, sofern dies nicht explizit erwähnt ist und eine besondere technische Wirkung durch diese Unterscheidung ableitbar ist. In diesem Sinne wird auch nicht zwischen einem Gebäude, einem Teilbereich eines Gebäudes oder einem definierten Bereich unterschieden.

Das erfindungsgemäße Verfahren kann sich weiters die Aufgabe stellen, Bildsensordaten beziehungsweise die Bildsensormodelldaten um ein geringst mögliches Maß, nämlich beispielsweise und somit nicht einschränkend um die im Folgenden beschriebenen Objektbewegungsdaten zu verändern oder zu ergänzen und hierdurch Simulationsdaten zu erstellen, welche Simulationsdaten in ein Alarmsystem zur Überprüfung dieses Alarmsystems eingebracht werden können.

Erfindungsgemäß werden die vom Stand der Technik ableitbaren Problemstellungen durch den Anspruch 1 oder durch den Anspruch 2 erreicht. Der Anspruch 1 betrifft im Wesentlichen die Durchführung des erfindungsgemäßen Verfahrens in einem virtuellen Bereich. Der Anspruch 2 betrifft im Wesentlichen die Durchführung des erfindungsgemäßen Verfahrens in einem real existierenden Bereich.

Durch die Abänderung der Bildsensordaten beziehungsweise der Bildsensormodelldaten um lediglich die Objektbewegungsdaten kann der Effekt der Integrität erzielt werden. Diese Änderung der Bildsensordaten ist leicht dokumentierbar.

Das erfindungsgemäße Verfahren sieht vor, dass Simulationsdaten in Form von Bilddaten erstellt werden, welche Bilddaten in einem nach dem Stand der Technik bekannten Format und in einer ebenso bekannten Form vorliegen, sodass diese Bilddaten Informationen über ein generiertes Bild im Allgemeinen umfassen.

Die Bilddaten können im Allgemeinen in Form von Videos oder Bildern in den gängigen Dateiformaten wie beispielsweise und nicht einschränkend avi, jpg et cetera oder als Stream vorliegen.

Es können die Bilddaten Codierungen der Objekte in Abhängigkeit der Eigenschaften der Objekte umfassen. Es können die Objekte unter Anwendung von Verfahren nach dem Stand der Technik farbcodiert werden. Es können die Bilddaten als Videodaten Angaben umfassen, in welchem Frame des Videos ein Objekt beschrieben ist. Es können die Bilddaten weitere Angaben über Eigenschaften der in den Bilddaten beschriebenen Objekte umfassen. Der Fachmann kennt derartige Beschreibungen unter dem Fachbegriff ground truth.

Die Bilddaten können vektorielle Angaben von Objekten umfassen.

Die Bilddaten können ein Abbild eines Sensorwirkungsbereiches sein.

Die Simulationsdaten stellen ein künstlich geschaffenes Abbild einer von einer nachgeschalteten Alarmeinheit zu überprüfenden, bei der Durchführung des erfindungsgemäßen Verfahrens nicht tatsächlich auftretenden und somit virtuell vorliegenden Situation dar, nämlich dass ein Objekt an dem ersten Ort virtuell bewegt wird. Dieses Abbild entspricht mit einer hinreichenden Genauigkeit einer später tatsächlich auftretenden Situation.

Die Alarmeinheit kann eine Klassifizierungseinheit umfassen, mittels welcher Klassifizierungseinheit die Klassifizierung der durch die Simulationsdaten beschriebenen, virtuellen Situation durchgeführt wird. Nachdem die Simulationsdaten durch ein Zusammenführen der Bildsensordaten beziehungsweise der Bildsensormodelldaten und der Objektbewegungsdaten erstellt werden, existiert die durch die Simulationsdaten beschriebene Situation real nicht und wird im Rahmen der Offenbarung des erfindungsgemäßen Verfahrens als eine virtuelle Situation betrachtet.

Die Klassifizierung einer mittels zumindest Bilddaten beschriebenen Situation ist üblicher Weise ein computerimplementierendes Verfahren. Es ist das Verfahren der Klassifizierung der Situation selbst nicht Teil des hier beschriebenen erfindungsgemäßen Verfahrens; das erfindungsgemäße Verfahren ist auf die Erstellung der Simulationsdaten als Eingangsdaten einer solchen Klassifizierung beschränkt.

Die obige Beschreibung umfasst die Bestimmung, dass die Alarmeinheit der Erstellung der Simulationsdaten nachgeschaltet ist. Die Erstellung der Simulationsdaten nach den im Rahmen der Offenbarung der Erfindung beschriebenen Merkmalen kann in einer Recheneinheit erfolgen, sodass die Simulationsdaten mittels Datenübertragung übertragen werden können. Die Simulationsdaten können auch mittels der Recheneinheit an einem Monitor angezeigt und mittels eines in der Alarmeinheit integrierten Bildsensors aufgenommen werden. Die Alarmeinheit kann eine Smartkamera mit einer Ereigniserkennung oder Situationserkennung umfassen.

Nach dem Stand der Technik erfolgt die Klassifizierung einer Situation in eine außergewöhnliche Situation (Alarmereignis) oder eine gewöhnliche Situation (kein Alarmereignis) unter Anwendung der Verfahren der Objekterkennung und/oder Analyse der Bewegung des erkannten Objektes. Der Fachmann erkennt, dass die Simulationsdaten insofern eine hinreichende Genauigkeit aufweisen müssen, als dass diese Genauigkeit keinen Einfluss auf die Klassifizierung der virtuellen Situation hat.

Das erfindungsgemäße Verfahren kann angewandt werden, um die durch die Alarmeinheit vorgenommene Klassifizierung von Situationen durch die Veränderung der Simulationsdaten gezielt weiterzuentwickeln.

Das Erfordernis der hinreichenden Genauigkeit kann dadurch erreicht werden, dass der Bereich und die Teilbereiche des Objektes zueinander sowie alleinstehend in der Realität vorkommende Proportionen aufweisen.

Die Proportionen der Körperteile einer Person, welche in den Objektbewegungsdaten hinterlegt sind, entsprechen den in der Realität vorkommenden Proportionen der Körperteile. Beispielsweise weist ein Kopf einer in den Objektbewegungsdaten beschriebenen Person im Vergleich zu den anderen Körperteilen der Person eine Kopfgröße auf, welche Proportion bei einer Person in der Realität wiederzufinden ist.

Ebenso sind die Proportionen bei einem Objekt wie einem Fahrzeug einzuhalten, welches Objekt durch die Objektbewegungsdaten beschrieben ist. Die Reifen des Fahrzeuges weisen im Vergleich zu anderen Dimensionen des Fahrzeuges eine Reifengröße auf, sodass die Proportionen des Fahrzeuges als reales Objekt und des virtuellen Fahrzeuges übereinstimmen.

Es sind weiters die Größenverhältnisse der Person oder des Objektes zu dem Gebäude und umgekehrt einzuhalten.

Der Fachmann erkennt, dass die Aufnahme einer Situation mittels eines Bildsensors im Allgemeinen, hier mittels des ersten Bildsensors in Abhängigkeit der Bildsensoreigenschaften einer geometrischen Verzerrung unterliegen kann. Dementsprechend können die Simulationsdaten ein verzerrtes Objekt umfassen, wobei die Verzerrung durch die Eigenschaften des ersten Bildsensors gegeben ist und somit der Realität entspricht.

Bei einer Objekterkennung werden beispielsweise geometrische Formen als ein Beispiel von Eigenschaften eines Objekts erkannt, an welchen geometrischen Formen eine Objekterkennung durchführbar ist. Eine hinreichende Genauigkeit ist eben dann gegeben, wenn die dem Bildsensor nachgeschaltete Alarmeinheit eine Objektklassifizierung - hier am Beispiel der Objekterkennung anhand von geometrischen Formen - bei Verfahren nach dem Stand der Technik und bei Durchführung einer Ausführungsform des erfindungsgemäßen Verfahrens unter Verwendung von Bilddaten beschreibend ein reales Objekt durchführen kann. In einer hierzu ähnlichen Weise ist die hinreichende Genauigkeit gegeben, wenn bei Anwendung einer weiteren Ausführungsform des erfindungsgemäßen Verfahrens unter Verwendung von Bilddaten beschreibend ein virtuelles Objekt ein Objektklassifizierung durch die nachgeschaltete Alarmeinheit durchführbar ist. Der Fachmann kennt weitere Techniken, wie eine Situation mittels einer Alarmeinheit klassifiziert werden kann, wovon konkrete Genauigkeitsanforderungen wie beispielsweise und nicht einschränkend das in den Simulationsdaten beschriebene Objektaussehen, die in den Simulationsdaten beschriebene Objektform abgeleitet werden können. Die Erstellung der Simulationsdaten kann umfassen, dass die von dem ersten Bildsensor erstellten Bildsensordaten um Objektbewegungsdaten beschreibend eine reale ablaufende Objektbewegung oder eine virtuelle Objektbewegung verändert werden. Dies schließt ein, dass die ersten Bildsensordaten um die Objektbewegungsdaten als Bilddaten eines bewegten Objektes ergänzt werden. In beiden Fällen beschreiben die Simulationsdaten eine virtuelle Situation, welche Situation als solche im Sensorwirkungsbereich real nicht existiert.

Die Objektbewegung kann entweder eine gewöhnliche Situation, welche gewöhnliche Situation von einer Alarmeinheit als keine Alarmsituation klassifiziert werden soll, oder eine außergewöhnliche Situation sein, aufgrund der Detektion welcher außergewöhnlichen Situation die Alarmeinheit bei einer Klassifizierung der Objektbewegung in dem Bereich als eine außergewöhnliche Situation einen Alarm auslösen soll. Im Rahmen der Offenbarung dieser Erfindung kann unter Verweis auf den Stand der Technik eine außergewöhnliche Situation beispielsweise und somit nicht einschränkend ein nicht berechtigtes Betreten eines Bereiches durch eine Person sein. Eine in dem Bereich stattfindende Situation kann insofern als eine außergewöhnliche Situation definiert sein, als dass diese außergewöhnliche Situation von der den Bereich überwachenden Person nicht gewünscht ist und das Auftreten oder der weitere Verlauf dieser Situation unterbunden werden soll.

Neben der Klassifizierung der Situation kann die Alarmeinheit auch einen Zustand im ersten Sensorwirkungsbereich erfassen. Die Alarmeinheit kann beispielsweise und nicht einschränkend die Anzahl von Personen im ersten Sensorwirkungsbereich oder das Wetter erfassen.

Die realen Objektbewegungsdaten, welche Objektbewegungsdaten als eine an dem zweiten Ort stattfindende Objektbewegung beschreibende Daten mit einem zweiten Sensor wie beispielsweise mit einem zweiten Bildsensor aufgenommene reale zweite Bilddaten erstellt werden, können als zweite Bilddaten in die ersten Bildsensordaten eingefügt werden. Es wird hierbei die an einem zweiten Ort real stattfindende Objektbewegung an den ersten Ort virtuell transformiert, was kurzum den technischen Vorteil mit sich bringt, dass die Objektbewegung an dem ersten Ort zu dem ersten Zeitpunkt nicht nachgestellt werden muss. Darüber hinaus kann eine Vielzahl von nacheinander ablaufenden Objektbewegungen oder eine Vielzahl von gleichzeitig ablaufenden Objektbewegungen in die Simulationsdaten integriert werden. Der Fachmann kann hier beliebige, auch zufallsgesteuerte Kombinationen gestalten.

Neben einem Bildsensor kann der Fachmann auch andere Sensoren wie beispielsweise und somit keinesfalls einschränkend Abstandsmesssensoren oder dreidimensionale Messsensoren (Laserscanner, Time-of-Flight) einsetzen, um eine an einem zweiten Ort stattfindende reale Bewegung aufzunehmen und als Daten in die ersten Bildsensordaten zu integrieren. Der Fachmann kann diese erwähnten Sensoren auch als erste Bildsensoren einsetzen.

Die Objektbewegungsdaten können somit als Bilddaten von einer real an dem zweiten Ort abgelaufenen Bewegung in die ersten Bildsensordaten eingefügt werden. Die Objektbewegungsdaten können somit als reale Objektbewegungsdaten bezeichnet werden.

Nach dem Stand der Technik ist es möglich, Objektbewegungen mit einer hinreichenden Genauigkeit in Form einer Computersimulation darzustellen. Der Fachmann kennt derartige Simulationen beispielsweise aus Computerspielen; derartige virtuelle Objektbewegungen sind dem Fachmann auch als Modellbewegungen oder mittels eines Computers erstellte Animationen bekannt. Das erfindungsgemäße Verfahren kann auch umfassen, dass virtuelle Objektbewegungen beschreibende Objektbewegungsdaten in die Bildsensordaten eingefügt werden.

Auch hier kann eine Vielzahl von nacheinander ablaufenden Objektbewegungen oder eine Vielzahl von gleichzeitig ablaufenden Objektbewegungen in die Simulationsdaten integriert werden. Der Fachmann kann hier beliebige, auch zufallsgesteuerte Kombinationen gestalten. Insbesondere Objektbewegungsdaten, welche Objektbewegungsdaten virtuelle Objektbewegungen beschreiben, erlauben die Integration einer Vielzahl von Objektbewegungen in die Simulationsdaten. Zusätzlich zu der Varianz der virtuellen Objektbewegungen können auch die Eigenschaften der Objekte wie beispielsweise und somit nicht einschränkend die Farbe, die Größe variiert werden.

Die Varianz der Objektbewegung - gleichgültig, ob es sich um eine aufgenommene reale Objektbewegung oder um eine virtuelle Objektbewegung handelt - kann beispielsweise und somit nicht einschränkend durch eine Varianz der Bewegungsgeschwindigkeit und/oder der Bewegungsrichtung und/oder des Bewegungsbereiches innerhalb des Sensorwirkungsbereiches gegeben sein.

Die Varianz der Objektbewegungen kann durch einen Benutzer ausgewählt werden. Der Benutzer kann hierbei eine mögliche Bandbreite an Objektbewegungen definieren. Die Varianz der Objektbewegungen kann auch zufallsgesteuert sein.

Die Erstellung der Simulationsdaten kann auch umfassen, dass die von dem ersten Bildsensor aufgenommenen Bildsensordaten und die virtuellen Objektbewegungsdaten zu den Simulationsdaten zusammengeführt werden. Der Fachmann sieht die Veränderung der ersten Bildsensordaten um die Objektbewegungsdaten und das Zusammenführen von ersten Bildsensordaten und Objektbewegungsdaten als grundsätzlich äquivalent an, wobei sich bei einer Computer implementierenden Durchführung des erfindungsgemäßen Verfahrens die Rechenvorgänge und/oder die erforderliche Eingabe des Benutzers unterscheiden können. In diesem Sinne ist die obige Beschreibung über die Erstellung von Simulationsdaten unter Veränderung der Bildsensordaten um die Objektbewegung auch auf die Erstellung der Simulationsdaten unter Zusammenführung der Bildsensordaten und der Objektbewegungsdaten anzuwenden.

Die ersten Bildsensordaten können sehr umfangreich sein. Die Bildsensordaten können auch Informationen über Objekte et cetera umfassen, welche Informationen für den Fachmann erkennbar für die Durchführung des erfindungsgemäßen Verfahrens relevant sind.

Die Erstellung der Simulationsdaten kann auch darauf basieren, dass unter Wahrung der oben beschriebenen hinreichenden Genauigkeit aus den oben erwähnten Eingabedaten das erste Bildsensormodell erstellt wird, wobei zur Erstellung des Bildsensormodells Verfahren nach dem Stand der Technik eingesetzt werden. Die Eingabedaten können Pläne, Fotos, Maßangaben des Bereiches sein, aus welchen Eingabedaten unter Verwendung von Computerprogrammen nach dem Stand der Technik ein Modell erstellt wird.

Es kann ein virtueller erster Bildsensor in diesem Modell angeordnet werden. Unter Berücksichtigung der Eigenschaften des ersten Bildsensors können Bildsensormodelldaten erstellt werden, welche Bildsensormodelldaten das Modell zumindest im Bereich des Sensorwirkungsbereiches des im Modell angeordneten Bildsensors beschreiben.

Die Bildsensormodelldaten können auch einen größeren Bereich als den Sensorwirkungsbereich beschreiben. Dies ist insbesondere dann sinnvoll, wenn die Funktionalität weiterer erster Bildsensoren unter Verwendung der Bildsensormodelldaten überprüft werden soll.

Die Bildsensormodelldaten können auf Informationen über Objekte et cetera beschränkt sein, welche für das erfindungsgemäße Verfahren relevant sind. Die Bildsensormodelldaten erfüllen allenfalls das Erfordernis der hinreichenden Genauigkeit, welche hinreichende Genauigkeit bereits oben erörtert wurde. Das erfindungsgemäße Verfahren kann umfassen, dass die Bildsensormodelldaten und die virtuellen Objektbewegungsdaten zu Simulationsdaten vereint werden. Dieser Schritt kann auch umfassen, dass die virtuellen Objektbewegungsdaten in die Bildsensormodelldaten integriert werden, wobei eine Vereinigung der Bildsensormodelldaten und der virtuellen Objektbewegungsdaten und eine Veränderung der Bildsensormodelldaten um die virtuellen Objektbewegungsdaten als zueinander äquivalent anzusehen sind.

Die Bildsensormodelldaten können das Modell zumindest im Bereich des Sensorwirkungsbereiches zweidimensional oder dreidimensional beschreiben. Im Regelfall eignet sich ein dreidimensionales Modell besser zur Bestimmung der Funktionalität eines Bildsensors.

Zur Erreichung der oben angeführten Anforderung der hinreichenden Genauigkeit der Simulationsdaten können die Modellsensordaten ein zweidimensionales oder dreidimensionales Abbild des Bereiches mit übereinstimmenden Dimensionen umfassen, wobei gegebenenfalls eine perspektivische Verzerrung zu berücksichtigen ist. Ebenso können die Dimensionen des Objektes, welche durch die Objektbewegungsdaten in das erfindungsgemäße Verfahren eingehen, ein Abbild des Objektes oder der Person mit übereinstimmenden Dimensionen sein, wobei gegebenenfalls eine perspektivische Verzerrung zu berücksichtigen ist. Die Simulationsdaten können sohin ein Abbild des Bereiches und des Objektes in Form eines zweidimensionalen oder dreidimensionalen Modells umfassen, wobei die im Modell dargestellten Dimensionen des Bereiches und des Objektes den realen Dimensionen des Bereiches oder des Objektes entsprechen sollen. Der Fachmann kann eine maßstäbliche Darstellung wählen, wobei derselbe Maßstab auf das Modell des Bereiches und das Modell des Objektes anzuwenden ist.

Die Frage der Dimensionalität des Bildsensormodells ist auch mit der Dimensionalität der Objektbewegung verbunden. Grundsätzlich muss das Bildsensormodell eine gleiche Dimensionalität wie die Objektbewegung aufweisen.

Das erfindungsgemäße Verfahren kann umfassen, dass die Bildsensormodelldaten und die Objektbewegungsdaten beschreibend eine reale Objektbewegung vereint werden.

Der Fachmann kann die oben angeführten Verfahrensschritte zur Erstellung von Simulationsdaten in einer beliebigen Wiese miteinander kombinieren.

Das Bildsensormodell kann - wie oben offenbart - auf der Grundlage der ersten Bildsensordaten unter Berücksichtigung der Eigenschaften des ersten Bildsensors erstellt werden, wobei hierzu die Bildsensordaten von einem einzigen ersten Bildsensor oder von mehreren ersten Bildsensoren herangezogen werden. Die Frage, aus wie vielen ersten Bildsensoren die Bildsensordaten bezogen werden, ist im Wesentlichen eine Frage der Genauigkeit und der Dimensionalität des zu erstellenden Bildsensormodells und welche Eigenschaften der erste Bildsensor aufweist. Ein beweglicher erster Bildsensor oder ein erster Bildsensor mit einem großen Sensorwirkungsbereich kann beispielsweise mehrere erste Bildsensoren ersetzen.

Das Bildsensormodell kann ergänzend oder alternativ zu der obigen Beschreibung der Erstellung des Bildsensormodelles auf der Grundlage von Planungsdaten oder auf der Basis von ermittelten Abmessungen und Dimensionen des Bereiches erstellt werden. Der Fachmann kann zur Erfassung der Abmessungen und der Dimensionen Sensoren nach dem Stand der Technik einsetzen.

Das erfindungsgemäße Verfahren zeichnet sich dadurch aus, dass die ersten Bildsensordaten frei von dem Objekt sind. Die ersten Bildsensordaten umfassen somit nicht das bewegte Objekt. Das gegebenenfalls aus den ersten Bildsensordaten erstellte Bildsensormodell umfasst ebenso nicht das bewegte Objekt. Das erste Bildsensormodell ist frei von dem bewegten Objekt; das erste Bildsensormodell kann auf statische Information beschränkt sein.

Die ersten Bildsensordaten beziehungsweise das Bildsensormodell können weitere Objekte umfassen. Die weiteren Objekte können nicht verfahrensrelevant sein.

Die Objektbewegungsdaten werden zu einem zweiten Zeitpunkt erstellt.

Der zweite Zeitpunkt kann vor oder nach dem ersten Zeitpunkt und somit unterschiedlich von dem ersten Zeitpunkt sein. Das erfindungsgemäße Verfahren kann sich sohin dadurch auszeichnen, dass die Objektbewegungsdaten zeitunabhängig von den ersten Sensordaten erstellt werden können.

Der zweite Zeitpunkt kann gleich zu dem ersten Zeitpunkt sein. Das erfindungsgemäße Verfahren kann sich dadurch auszeichnen, dass die virtuellen Objektbewegungsdaten in Echtzeit mit den ersten Bildsensordaten beziehungsweise den Bildsensormodelldaten zusammengeführt werden.

Es kann der erste Ort und der zweite Ort unterschiedlich sein. Die Erstellung der Objektbewegung kann sohin ortsunabhängig erfolgen.

Die Ortsunabhängigkeit und die Zeitunabhängigkeit des erfindungsgemäßen Verfahrens hinsichtlich der Objektbewegung zu dem ersten Ort erlaubt die virtuelle Integration der Objektbewegung an Orte zu Zeitpunkten, zu welchen Orten und zu welchen Zeitpunkten kein Zutritt besteht.

Das erfindungsgemäße Verfahren umfasst den Schritt des perspektivischen Abgleiches. Die Blickrichtung des ersten Bildsensors auf den ersten Ort und somit auf den Sensorwirkungsbereich soll der Blickrichtung des zweiten Bildsensors auf den zweiten Ort und somit auf das bewegte Objekt ähnlich sein. Das erfindungsgemäße Verfahren kann nur dann Simulationsdaten mit einer hinreichenden Genauigkeit liefern. Umfassen die Simulationsdaten beispielsweise und nicht einschränkend eine Seitenansicht auf den Bereich, welche Seitenansicht auf den Bereich zumindest den Sensorwirkungsbereich umfasst, so kann das Erfordernis der hinreichenden Genauigkeit nur dann erreicht werden, wenn die Simulationsdaten eine Seitenansicht auf das bewegte Objekt umfassen. Simulationsdaten, welche beispielsweise eine Seitenansicht auf eine Fassade eines Gebäudes umfassen, können keine Ansicht von oben auf eine Person umfassen.

Dies kann auch die Skalierung der Größenverhältnisse umfassen. Dieser Verfahrensschritt ist erforderlich, um eine hinreichende Genauigkeit der Simulationsdaten zu erzielen.

Die virtuellen Objektbewegungsdaten können ein dreidimensionales Modell einer Bewegung eines Objektes oder einer Person sein. Das erfindungsgemäße Verfahren kann den Schritt umfassen, dass das sich bewegende Objekt von einem Blickpunkt betrachtet wird, aus welchem Blickpunkt auch der Bereich betrachtet wird.

Die Verwendung eines Bildsensormodells und die Verwendung von Objektbewegungsdaten, welche die Objektbewegung anhand eines Modells beschreiben, kann sinnvoll sein, da die Verwendung von Modellen den Abgleich der Blickrichtungen und die Varianz der Blickrichtungen erleichtern kann. Durch die hier diskutierte Zusammenführung der Objektbewegungsdaten und Bildsensordaten beziehungsweise der Bildsensormodelldaten kann im Wesentlichen ein vektorielles Problem reduziert werden, welches Problem mit der gängigen Lehre der Mathematik für den Fachmann lösbar ist. Es ist ein definierter Bereich gleichsam wie ein Gebäude oder ein Teilbereich eines Gebäudes mittels Vektoren darstellbar. CAD-Programme oder sonstige Programme zur planlichen oder visuellen Darstellung eines Gebäudes oder eines Bereiches basieren auf einer solchen Darstellung mittels Vektoren.

Das Bildsensormodell kann auf einer solchen Darstellung des Gebäudes mittels Vektoren basieren. Die mittels des ersten Bildsensors erstellten Bilddaten können das Format einer vektoriellen Darstellung aufweisen. Die Vektoren können hierbei zweidimensional oder dreidimensional und gegebenenfalls zeitabhängig sein.

Die Objektbewegungsdaten können eine vektorielle Beschreibung der Objektbewegung und gegebenenfalls eine vektorielle Bewegung der Teilbereiche des Objektes umfassen. Die Objektbewegung kann durch Wegpunkte und durch Objektbewegungsgeschwindigkeiten beschrieben sein.

Das Erfordernis der Berücksichtigung von Bewegungen von Teilbereichen eines Objektes kann eine Frage der erforderlichen Genauigkeit sein.

Die Objektbewegungsdaten können eine Bewegung des Objektes mittels zeitabhängiger Vektoren definieren.

Zur Erstellung der Simulationsdaten kann die vektorielle Darstellung des Bereiches mit der vektoriellen Darstellung der Bewegung ergänzt oder zusammengeführt werden. Die vektorielle Darstellung des Bereiches und der Objektbewegung erlaubt auch das perspektivische Anpassen der Blickrichtungen, sodass Simulationsdaten mit einer an dem ersten Ort ablaufenden Bewegung erstellt werden.

Das erfindungsgemäße Verfahren kann sich dadurch auszeichnen, dass
die Bildsensordaten oder die Bildsensormodelldaten unter Berücksichtigung der Eigenschaften eines an einem einzigen Bildsensorort verharrenden ersten Bildsensors erstellt werden.

Der erste Bildsensor kann ein in einem Bereich fest angeordneter Bildsensor sein. Eine übliche Überwachungskamera kann einen solchen Bildsensor umfassen. Die Überwachungskamera kann schwenkbar sein und ein Teleobjektiv umfassen, sodass der Sensorwirkungsbereich veränderbar ist.

Die Verwendung eines Bildsensormodells und in Form eines Modells vorliegender Objektbewegungsdaten kann eine Auswahl eines ersten Bildsensors aus einer Vielzahl von möglichen Bildsensoren erlauben. Dies kann unabhängig davon erfolgen, ob der erste Bildsensor ortsfest oder beweglich angeordnet ist.

Eine übliche Drohne kann den ersten Bildsensor umfassen.

Das erfindungsgemäße Verfahren kann sich dadurch auszeichnen, dass
die Bildsensordaten mittels eines um eine Bildsensortrajektorie bewegten ersten Bildsensors erstellt werden beziehungsweise die Bildsensormodelldaten unter Berücksichtigung eines um eine Bildsensortrajektorie bewegten ersten Bildsensors erstellt werden.

Eine übliche Drohne oder ein Fahrzeug kann den ersten Bildsensor umfassen.

Das erfindungsgemäße Verfahren kann sich dadurch auszeichnen, dass
die Objektbewegungsdaten Bewegungen ausgewählter Teilbereiche des Objektes beschreiben.

Das erfindungsgemäße Verfahren schafft Simulationsdaten, mittels welcher Simulationsdaten eine Objektbewegung eines Objektes an dem ersten Ort im Sensorwirkungsbereich beschrieben wird.

Eine Objektbewegung in dem Bereich kann sich dadurch auszeichnen, dass Teilbereiche des Objektes sich zueinander relativ bewegen. Es kann im Rahmen einer Klassifizierung einer Situation entscheidend sein, dass die Simulationsdaten die relevanten Teilbereiche des Objektes beschreiben. Die Simulationsdaten können die Bewegungen aller Objektteilbereiche beschreiben.

Die Objektbewegungsdaten können die Bewegungen aller Teilbereiche des Objektes oder jener Teilbereiche beschreiben, welche Teilbereiche mit ihren Bewegungen einen Einfluss auf die durch die Alarmeinheit vorgenommene Objekterkennung und/oder Mustererkennung haben. Es kann hierdurch das Erfordernis der hinreichenden Genauigkeit erfüllt werden.

Das erfindungsgemäße Verfahren kann sich dadurch auszeichnen, dass
die Simulationsdaten um virtuelle Umgebungsdaten verändert werden
   oder
die Simulationsdaten umfassend virtuelle Umgebungsdaten erstellt werden,
welche Umgebungsdaten einen Umwelteinfluss auf den Sensorwirkungsbereich beschreiben.

Die Simulationsdaten können Bilddaten mit einer veränderlichen Helligkeit oder einem veränderlichen Kontrast umfassen, sodass das erfindungsgemäße Verfahren die Simulation unterschiedlicher Beleuchtungsszenarien erlaubt. Es kann eine veränderliche Anzahl von Lichtquellen mit unterschiedlichen Eigenschaften und die hierdurch erzeugte unterschiedliche Beleuchtung durch die Simulationsdaten beschrieben werden.

Es ist oben das Beispiel von Schneefall oder Regen erwähnt. Die Simulationsdaten können Schneeflocken als bewegte Objekte umfassen, sodass der Umwelteinfluss von Schneefall durch die Objektbewegungsdaten simuliert werden kann.

Es ist oben weiters das Beispiel von Nebel erwähnt. Die Simulationsdaten können nicht bewegte Objekte zur Simulierung von beispielsweise und nicht einschränkend Nebel umfassen.

Das erfindungsgemäße Verfahren kann sich dadurch auszeichnen, dass ein einziges Bildsensormodell zur Erstellung von einer Vielzahl von unterschiedlichen Simulationsdaten verwendet wird,
welche Simulationsdaten unterschiedliche Objektbewegungsdaten umfassen und/oder
welche Simulationsdaten unterschiedliche Bildsensormodelldaten umfassen.

In der obigen Beschreibung wurde bereits erwähnt, dass die Objektbewegungen variiert werden können und so eine Vielzahl von Objektbewegungsdaten erstellt werden kann. Es kann so eine Vielzahl von Simulationsdaten erstellt werden, welche Vielzahl an Simulationsdaten durch die Vielzahl an Objektbewegungsdaten begründet ist.

In der obigen Beschreibung wurde weiters erwähnt, dass die Bildsensormodelldaten zumindest den Sensorwirkungsbereich mittels eines Modells beschreiben. Eine Vielzahl an Bildsensormodelldaten kann durch eine Varianz des berücksichtigten ersten Bildsensors, durch eine Varianz der Einstellungen und Eigenschaften der berücksichtigten Bildsensoren und durch eine Varianz des Modells begründet sein. Diese Vielzahl an Bildsensormodelldaten kann eine Vielzahl an Simulationsdaten begründen.

Die Vielzahl der Simulationsdaten kann weiters durch die Vielzahl an Objektbewegungsdaten und durch die Vielzahl an Bildsensormodelldaten gegeben sein.

Die obige Beschreibung erwähnt einen einzigen ersten Bildsensor zur Erstellung der Bildsensordaten. Das erfindungsgemäße Verfahren kann sich jedoch dadurch auszeichnen, dass
die Sensordaten über den Sensorwirkungsbereich durch einen einzigen Bildsensor oder durch mehrere Bildsensoren erstellt werden. Die obige Beschreibung erwähnt die Erstellung der Bildsensormodelldaten beschreibend den Sensorwirkungsbereich eines einzigen ersten Bildsensors. Das erfindungsgemäße Verfahren kann sich jedoch dadurch auszeichnen, dass die Bildsensormodelldaten beschreibend Sensorwirkungsbereiche mehrerer erster Bildsensoren erstellt werden.

Das erfindungsgemäße Verfahren kann sich dadurch auszeichnen, dass
die in das Verfahren eingehende Zeitspanne der Objektbewegungsdaten zu einer realen Zeitspanne der Objektbewegung unterschiedlich ist.

Die virtuelle Objektbewegung kann eine Zeitspanne andauern, welche Zeitspanne einer real ablaufenden Bewegung entsprechen kann. Das erfindungsgemäße Verfahren kann derart ausgeführt werden, dass die Simulationsdaten eine Vielzahl von nacheinander ablaufenden Objektbewegungen oder gleichzeitig ablaufenden Objektbewegungen umfassen. Um die Simulationszeit zu verkürzen, können die Objektbewegungen in einer kürzeren Zeitspanne ablaufen als jene Zeitspanne, die üblicher Weise eine real ablaufende Bewegung andauert.

Das schnellere Ablaufen von Objektbewegungen kann sowohl Umwelteinflüsse wie Schneefall oder Regen (beispielsweise und nicht einschränkend) als auch bewegte Objekte betreffen, welche Objekte eine für die Alarmeinheit zu klassifizierende gewöhnliche Situation (kein Alarm) oder eine außergewöhnliche Situation (Alarmereignis) darstellt.

Das erfindungsgemäße Verfahren kann auch den umgekehrten Fall betreffen, nämlich dass die Zeitspanne der virtuell ablaufenden Bewegung länger ist als die Zeitdauer einer real ablaufenden Bewegung. Es kann beispielsweise die virtuelle Objektbewegung in Zeitlupe ablaufend simuliert werden.

Es kann hierdurch das erfindungsgemäße Verfahren in Hinblick auf die zur Verfügung stehende Rechnerleistung optimiert werden, sofern das erfindungsgemäße Verfahren als ein computerimplementiertes Verfahren durchgeführt wird. Weiters kann der Benutzer, welcher die Simulationsdaten als Bilddaten betrachtet, Zeitbereiche der Simulation mit einer von der Dauer der Zeitspanne abhängigen Genauigkeit ansehen.

Das erfindungsgemäße Verfahren kann sich dadurch auszeichnen, dass
der erste Ort und der zweite Ort unterschiedlich sind und/oder
der erste Bildsensor und der zweite Bildsensor unterschiedlich sind.

Das erfindungsgemäße Verfahren kann sich dadurch auszeichnen, dass
der Sensorwirkungsbereich Bereichseigenschaften und das Objekt Objekteigenschaften aufweist, welche Bereichseigenschaften beziehungsweise Objekteigenschaften veränderlich sind.

Der Fachmann kann die Bereichseigenschaften und/oder die Objekteigenschaften virtuell verändern und hierdurch weitere die veränderten Bereichseigenschaften und/oder die veränderten Objekteigenschaften beschreibende Simulationsdaten erstellen. Auf diese Weise kann der Fachmann die Funktionalität des ersten Bildsensors in Abhängigkeit der geänderten Bereichseigenschaften und/oder die geänderten Objekteigenschaften überprüfen. Der Fachmann kann hierzu in einer vorteilhaften Weise die Bildsensormodelldaten oder die modellierten Objektbewegungsdaten einsetzen.

Die Bereichseigenschaften können beispielsweise und sohin nicht einschränkend Wettereigenschaften wie einen Nebel oder Lichtverhältnisse beschrieben. Es ist allgemein bekannt, dass die Qualität der mittels der Bildsensoren erstellten Bilddaten stark von diesen Wettereigenschaften abhängt. Eine nachfolgende Verarbeitung der Bilddaten wie beispielsweise eine Objekterkennung kann jedoch nur bei einer hinreichenden Qualität der Bilddaten durchgeführt werden. Nach dem Stand der Technik können Grenzen einer möglichen Verarbeitbarkeit von Bilddaten definiert werden.

Es ist eine mögliche Anwendung des erfindungsgemäßen Verfahrens, die Grenzen der Verarbeitbarkeit zu ermitteln. Der Anwender kann dies machen, indem der Anwender die Bereichseigenschaften verändert. Eine Verarbeitbarkeit von Bilddaten kann auch von den Objekteigenschaften abhängig sein. Der Anwender kann die Objekteigenschaften verändern und so Grenzen der Verarbeitbarkeit der Bilddaten ermitteln. Der Fachmann kann beispielsweise die Farbe des Objektes als Objekteigenschaft verändern. Der Anwender kann so beispielsweise überprüfen, welche Farbdifferenz ein Objekt zu einem Hintergrund aufweisen muss, sodass die Bilddaten eine Objekterkennung erlauben.

Die Erfindung wird anhand der folgenden Figuren 1 bis 9 ergänzend erläutert.
- Fig. 1:: ein mittels Bildsensormodelldaten generiertes Abbild des Bereiches
- Fig. 2:: eine modellierte Objektbewegung
- Fig. 3:: eine modellierte Objektbewegung
- Fig. 4:: eine modellierte Objektbewegung
- Fig. 5:: ein mittels Simulationsdaten generiertes Abbild einer Situation
- Fig. 6:: ein mittels Bildsensormodelldaten generiertes Abbild des Bereiches
- Fig. 7:: ein mittels Bildsensormodelldaten generiertes Abbild des Bereiches
- Fig. 8:: ein mittels Bildsensormodelldaten generiertes Abbild des Bereiches
- Fig. 9:: eine Veranschaulichung der Datenströme

Die in den Figuren gezeigten Ausführungsformen zeigen lediglich mögliche Ausführungsformen, wobei an dieser Stelle bemerkt sei, dass die Erfindung nicht auf diese speziell dargestellten Ausführungsvarianten derselben eingeschränkt ist, sondern auch Kombinationen der einzelnen Ausführungsvarianten untereinander und eine Kombination einer Ausführungsform mit der oben angeführten allgemeinen Beschreibung möglich sind. Diese weiteren möglichen Kombinationen müssen nicht explizit erwähnt sein, da diese weiteren möglichen Kombinationen aufgrund der Lehre zum technischen Handeln durch gegenständliche Erfindung im Können des auf diesem technischen Gebiet tätigen Fachmannes liegen.

Die Figuren zeigen stark schematische Bilder, um die Anforderungen von Figuren eines

Patentdokumentes zu erfüllen. Bei einer Ausführung des erfindungsgemäßen Verfahrens können die Bilder eine höhere Genauigkeit und eine realistische Genauigkeit aufweisen.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsformen können für sich eigenständige erfinderische Lösungen darstellen. Die den eigenständigen erfinderischen Lösungen zugrundeliegende Aufgabe kann der Beschreibung entnommen werden.

In den Figuren sind die folgenden Elemente durch die vorangestellten Bezugszeichen gekennzeichnet:
- 1: Person
- 2: erster Ort
- 3: zweiter Ort
- 4: Raum für Objektbewegung
- 5: Koordinatensystem
- 6: Bewegungspfad
- 7: freie Zone
- 8: gesperrte Zone
- 9: Anfangspunkt des Bewegungspfades
- 10: Endpunkt des Bewegungspfades
- 11: Gebäude
- 12: Fenster
- 13: Bank
- 14: Auto
- 15: Schatten
- 16: erster Bildsensor
- 17: Alarmeinheit
- 18: erste Bilddaten
- 19: Rechnereinheit zur Durchführung des erfindungsgemäßen Verfahrens
- 20: Simulationsdaten
- 21: Beine
- 22: Füße
- 23: Arme
- 24: Hände
- 25: Kopf
- 26: Baum

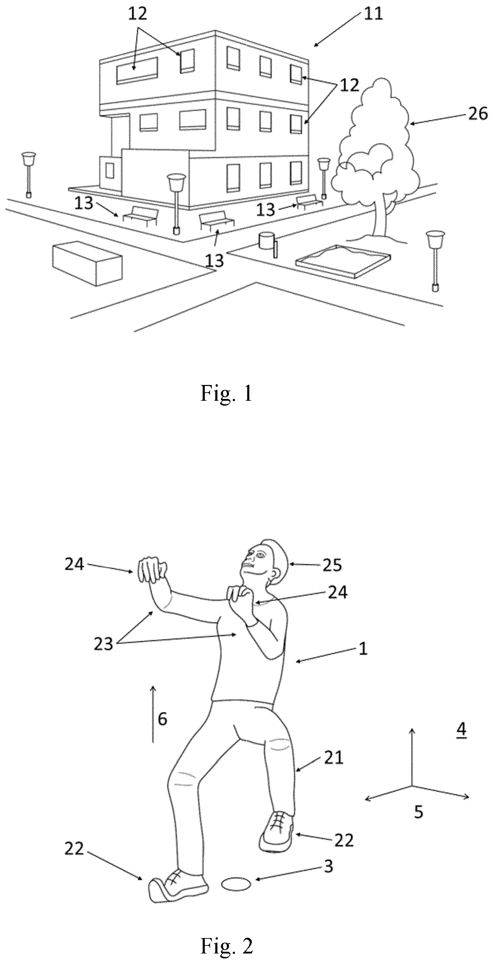

Die Figur 1 zeigt ein Modell eines Gebäudes 11. Das Modell veranschaulicht die Außenseite eines zu überwachenden Gebäudes 11, welches zu überwachende Gebäude 11 real existiert oder welches zu überwachende Gebäude sich in einem Planungsstadium oder in einer Bauphase befindet. Allenfalls kann der Fachmann unter Anwendung seines Fachverständnisses ohne eine erfinderische Tätigkeit ein Modell des Gebäudes 11 erstellen. Das Bildsensormodell bildet das Gebäude 11 mit einer hinreichenden Genauigkeit ab, sodass mittels eines Computers implementierenden Verfahrens die Situation umfassend ein Modell des Gebäudes 11 und gegebenenfalls der Objektbewegung klassifizierbar ist.

Die Figur 1 veranschaulicht ausschließlich die Bildsensormodelldaten, welche Bildsensormodelldaten in der in Figur 1 gezeigten Ansicht beispielhaft dargestellt sind. Die in Figur 1 gezeigte Ansicht des Gebäudes 11 kann eine modellhafte Ansicht sein, welche modellhafte Ansicht aus einem Bildsensormodell erstellt wird, wobei das Bildsensormodell aus Planungsdaten oder auf Basis von Bilddaten erstellt wird. Die Erstellung von modellhaften Ansichten aus einem Bildsensormodell hat den Vorteil, dass ein Bildsensormodell zur Erstellung von mehreren modellhaften Ansichten verwendet werden kann.

Das Gebäude 11 umfasst Fenster 12, wobei nur einige der Fenster in Figur 1 und in den weiteren Figuren mit einem Bezugszeichen versehen sind. Es sind vor dem Gebäude 11 Bänke 13 angeordnet. Es sind weitere Objekte wie beispielsweise Laternen, ein Baum 26, eine Sandkiste und ein Abfalleimer vor dem Gebäude 11 angeordnet. Der mittels Bildsensormodelldaten beschriebene, in Figur 1 dargestellte Bereich umfasst zumindest den Sensorwirkungsbereich des ersten Bildsensors. Der Fachmann erkennt, dass im Fall der Figur 1 der erste Bildsensor ein Außensensor ist, welcher Außensensor die in Figur 1 dargestellte Ansicht des Gebäudes 11 aufnimmt.

Die in Figur 1 gezeigte Ansicht des Gebäudes 11 kann auch ergänzend oder alternativ zu der modellhaften Ansicht eine reale Ansicht umfassen, welche reale Ansicht mit dem ersten Bildsensor aufgenommen wird.

Die Figur 1 ist frei von Personen und/oder Objekten, welche Personen und/oder Objekte bei einer Klassifizierung der Situation ein Entscheidungskriterium für eine Klassifikation der Situation als eine gewöhnliche Situation oder eine außergewöhnliche Situation oder eine nicht klassifizierbare Situation darstellen können.

Die Figur 2 zeigt ein Szenenbild einer möglichen Objektbewegung einer Person 1. Es ist die Person ähnlich zu der Darstellung des Gebäudes 11 in der Figur 1 schematisch dargestellt, um den Anforderungen an Figuren in Patentdokumenten zu genügen; eine realistischere Beschreibung der Figur ist bei einer Durchführung des erfindungsgemäßen Verfahrens möglich. Die in Figur 2 beispielhaft gezeigte Person 1 führt eine Kletterbewegung aus. Ein solches in der Figur 2 beispielhaft gezeigtes Szenenbild geht als Objektbewegungsdaten in das erfindungsgemäße Verfahren ein. Die Objektbewegungsdaten liegen als Bilddaten vor.

Die Figur 2 zeigt eine Person 1, welche sich an einem zweiten Ort 3 bewegt. Es ist in Figur 2 der zweite Ort 3 mittels eines Kreises symbolisiert. Nachdem die Figur 2 eine Situation einer Objektbewegung darstellt, ist der zweite Ort 3 als ein Punkt in dem in Figur 2 dargestellten Raum 4 zu verstehen, an welchem Ort sich die Person 1 zu dem dargestellten Zeitpunkt befindet.

Der Raum 4 ist durch ein dreidimensionales Koordinatensystem 5 definiert. Es kann der zweite Ort 3 in dem Raum 4 als ortsfest oder als veränderlich definiert sein. Bei einer ortsfesten Definition des zweiten Ortes 3 führt die Person 1 eine Objektbewegung am zweiten Ort 3 durch. Im Falle einer Definition des zweiten Ortes 3 als ein veränderlicher Ort, führt die Person 1 eine Bewegung, hier nicht einschränkend eine Kletterbewegung entlang eines Bewegungspfades 6 durch.

Die Figur 2 zeigt die Bewegung der Person 1 zu einem Zeitpunkt. Die Objektbewegungsdaten beschreiben auch eine Bewegung der Teilbereiche der Person 1. Die Objektbewegungsdaten beschreiben insbesondere die einzelnen Bewegungen der Arme, der Beine, des Kopfes und sonstiger Körperteile der Person 1.

Die in Figur 2 dargestellte Person 1 umfasst Beine 21 und Arme 23. Eine detaillierte Beschreibung der Bewegung der Person 1 in den Objektbewegungsdaten kann eine zeitlich veränderliche Bewegung der Füße 22 und der Hände 24 berücksichtigen, welche zeitlich veränderliche Bewegung der Füße 22 und der Hände 24 bei einer hier beispielhaft dargestellten kletternden Bewegung in der Realität zu beobachten ist. Die Figur 2 zeigt beispielsweise eine Verformung eines Vorderfußes 22 und die greifende Stellung der Hände 24. Weiters ist der Kopf 25 der Person 1 nach hinten geneigt.

Eine Klassifizierung einer Bewegung kann auf der Grundlage dieser Teilbewegungen oder auf der Grundlage der Bewegung der Person 1 als ganzes Objekt erfolgen. Die Objektbewegungsdaten beschreiben die Bewegung der Person 1 unter gegebenenfalls Berücksichtigung der Teilbewegungen mit der bereits oben beschriebenen hinreichenden Genauigkeit, sodass eine Klassifizierung der Bewegung der Person 1 möglich ist.

Die Person 1 ist in Figur 2 unter Beachtung der menschlichen Proportionen dargestellt; aufgrund der zu beachtenden perspektivischen Darstellung können Verzerrungen auftreten. Die Objektbewegungsdaten beschreiben das sich bewegende Objekt, hier die sich bewegende Person 1 unter Beachtung der in der Realität auftretenden Proportionen.

Die Figur 2 zeigt eine Beschreibung der Objektbewegung mittels eines dreidimensionalen Modells, welches Modell sehr einfach in ein Bildsensormodell, welches Bildsensormodell den Bereich mit einem zweidimensionalen oder dreidimensionalen Modell beschreibt, integrierbar ist.

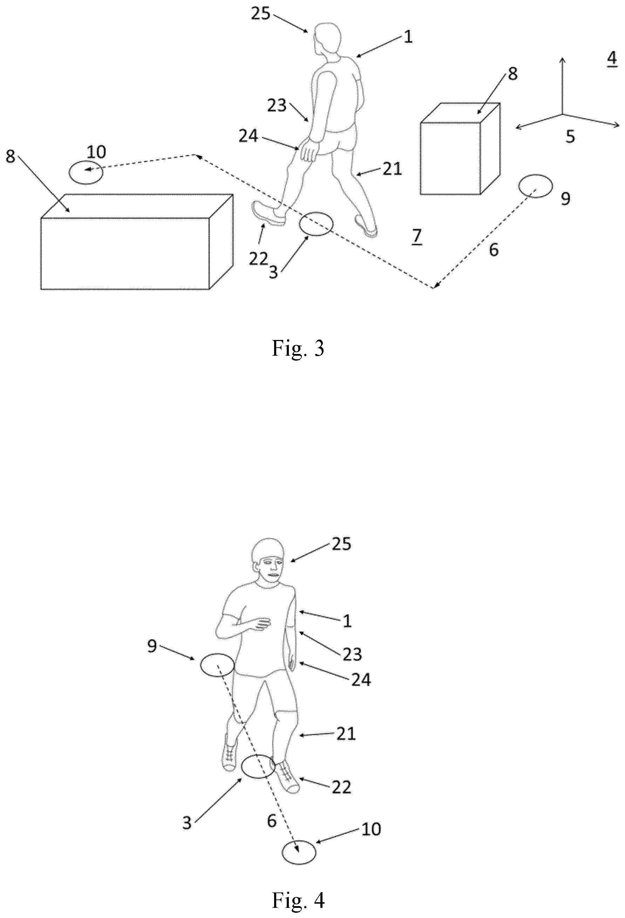

Die Figur 3 zeigt ein weiteres Szenenbild einer Person 1, welche Person 1 an dem zweiten Ort 3 bewegt wird. Die Person 1 bewegt sich entlang eines Bewegungspfades 6, welcher Bewegungspfad 6 ausschließlich in einer freien Zone 7 eines durch ein Koordinatensystem 5 beschreibbaren Raumes 4 verläuft; der Ort 3 ist sohin ein veränderlicher Ort. Der Raum 4 umfasst gesperrte Zonen 8, in welchen gesperrten Zonen 8 keine Objektbewegung stattfinden kann, und freie Zonen 7, in welchen freien Zonen 7 eine Objektbewegung stattfinden kann. Die gesperrten Zonen 8 sind durch im Raum 4 situierte Objekte definiert.

Die Person 1 befindet sich an einem veränderlichen zweiten Ort 3; die Veränderung des zweiten Ortes 3 ist durch den Bewegungspfad 6 definiert.

Die oben angeführte Definition des Bewegungspfades 6 erlaubt die Betrachtung einer Vielzahl von möglichen Objektbewegungen, nämlich jene Objektbewegungen, die ausschließlich in der freien Zone 7 verlaufen. Der Fachmann kann unter Einsatz von Computer implementierenden Verfahren eine Vielzahl der möglichen Objektbewegungen erstellen, wobei die Figur 3 eine mögliche Objektbewegung entlang des in Figur 3 dargestellten einen möglichen Bewegungspfades 6 von einem Anfangspunkt 9 zu einem Endpunkt 10 darstellt.

Die Objektbewegungsdaten können als Bilddaten die Vielzahl der möglichen Objektbewegungen der Person 1 umfassen. Die in Figur 3 dargestellte Person 1 weist die einem Menschen entsprechenden Körperproportionen auf. Die in Figur 3 dargestellten Objektbewegungsdaten können eine Beschreibung von Teilbewegungen des Kopfes 25, der Arme 23 und der Beine 21 umfassen; es ist die obige Beschreibung sinngemäß anzuwenden.

Die Figur 4 zeigt eine Objektbewegung einer entlang einer Geraden sich erstreckenden Bewegungspfades 6 laufenden Person 1. Der zweite Ort 3 ändert sich mit der Position der Person 1, welche Person 1 sich von einem Anfangspunkt 9 des Bewegungspfades 6 zu einem Endpunkt 10 des Bewegungspfades 6 - hier beispielsweise und somit nicht einschränkend laufend - bewegt. Es kann sohin der Bewegungspfad 6 durch Punkte in einem Raum 4 wie beispielsweise und nicht einschränkend durch den Anfangspunkt 9 und den Endpunkt 10 definiert werden, wobei der Bewegungspfad 6 die Punkte auf dem kürzesten Weg oder in Form einer Kurve verbindet. Der Fachmann kann auch weitere Punkte oder auch freie Zonen (in Figur 4 nicht eingetragen, siehe Figur 3) definieren, durch welche weiteren Punkte oder freien Zonen der Bewegungspfad 6 verläuft.

Die Bewegungsdaten können die Objektbewegung des Person 1 entlang eines sich von einen Anfangspunkt 9 zu einem Endpunkt 10 erstreckenden und gegebenenfalls weitere Punkte oder freie Zonen durchquerenden Bewegungspfades 6 umfassen.

Die in den Figuren 2 bis 4 dargestellten Objektbewegungen sind virtuelle Objektbewegungen, welche Objektbewegungen mittels eines Modells beschrieben sind und an einem zweiten Ort 3 ablaufen. Die in den Figuren 2 bis 4 dargestellten Objektbewegungen basieren auf einem dreidimensionalen Modell, welches Modell einfach unter Berücksichtigung der Größenverhältnisse und Blickrichtungen mit einem Bildsensormodell zur Erstellung von Simulationsdaten zusammengeführt werden kann.

Die in den Figuren 2 bis 4 gezeigten Personen 1 weisen der Realität entsprechende Körperproportionen auf. Der Fachmann kann bei oder vor einer Zusammenführung von Objektbewegungsdaten und Bildsensordaten die Eigenschaften der Personen 1 variieren, um so eine Bandbreite von Eigenschaften zu berücksichtigen. Der Fachmann kann beispielsweise und somit keinesfalls einschränkend die Hautfarbe der Person, die Farbe der Kleidung, die Bewegungsgeschwindigkeit der Person 1 als Eigenschaften variieren. Zur Erreichung der oben beschriebenen hinreichenden Genauigkeit können die Objektbewegungsdaten eine realistischere Beschreibung der Person umfassen.

Der Fachmann kann auch anstelle der modellisierten Personen 1 die reale Objektbewegung von realen Personen aufnehmen. Die Darstellung der Personen 1 in Form eines Modells hat jedoch den technischen Vorteil, dass die Eigenschaften der modellisierten Personen veränderbar sind.

Eine mit einem zweiten Bildsensor aufgenommene reale Objektbewegung unterliegt darüber hinaus nachteilig einer Beschränkung hinsichtlich der durch den einen zweiten Bildsensor vorgegebenen Blickrichtung und des zur Erreichung der hinreichenden Genauigkeit erforderlichen Abgleiches der Blickrichtungen.

Der Fachmann kann eine reale Objektbewegung mit mehreren zweiten Bildsensoren aufnehmen, um so mehrere durch die zweiten Bildsensoren vorgegebene Blickrichtungen auf das sich bewegende Objekt zu erstellen.

Die Bewegungsdaten wie in den Figuren 2 bis 4 beispielhaft dargestellt beschreiben allesamt eine Objektbewegung einer Person 1 - wie in den Figuren 2 bis 4 beispielhaft und somit nicht einschränkend dargestellt - oder hierzu äquivalent für das erfindungsgemäße Verfahren eines Objektes als Bilddaten. Die Objektbewegung wird weiters durch ein dreidimensionales Koordinatensystem definiert, wobei der Fachmann auch andere Koordinatensysteme oder andere Formen der hinreichenden Definition der Objektbewegung einsetzen kann. Allenfalls wendet der Fachmann eine hinreichende Definition der Objektbewegung an, sodass diese Objektbewegung in das in Figur 1 dargestellte Modell integriert werden kann.

Durch die Objektbewegungsdaten, welche eine in den Figuren 2 bis 4 beispielhaft dargestellte Objektbewegung in einem Raum 4 beschreiben, ist nicht definiert, ob die jeweilige Objektbewegung eine außergewöhnliche Situation oder eine gewöhnliche Situation darstellt.

Es ist nach dem Stand der Technik bekannt, Bildsensormodelldaten zu erstellen, welche Bildsensormodelldaten einen Sensorwirkungsbereich eines Bereiches mit einer hinreichenden Genauigkeit beschreiben. Es ist ebenso nach dem Stand der Technik bekannt, Objektbewegungsdaten gemäß der obigen Beschreibung zu erstellen, welche Objektbewegungsdaten eine Person und/oder ein Objekt sowie eine Bewegung dieser Person beziehungsweises dieses Objektes mit einer hinreichenden Genauigkeit beschreiben.

Das erfindungsgemäße Verfahren bietet eine technische Lösung zur Überprüfung eines Alarmsystems an, welche technische Lösung auf einem Zusammenführen der Bildschirmmodelldaten und der Objektbewegungsdaten und der Erstellung von Simulationsdaten hierdurch basiert, wobei die Simulationsdaten eine hinreichende Genauigkeit aufweisen, sodass das Alarmsystem, welches Alarmsystem unter Verarbeitung der Simulationsdaten eine Klassifizierung der durch die zusammengeführten Daten beschriebenen Situation vornehmen kann. Dies impliziert, dass die Simulationsdaten an die Alarmeinheit weitergeleitet werden und von der Alarmeinheit empfangen werden.

Die hinreichende Genauigkeit der Simulationsdaten ist dadurch begründet, dass die Bildsensormodelldaten und die Objektbewegungsdaten wie oben beschrieben eine hinreichende Genauigkeit aufweisen.

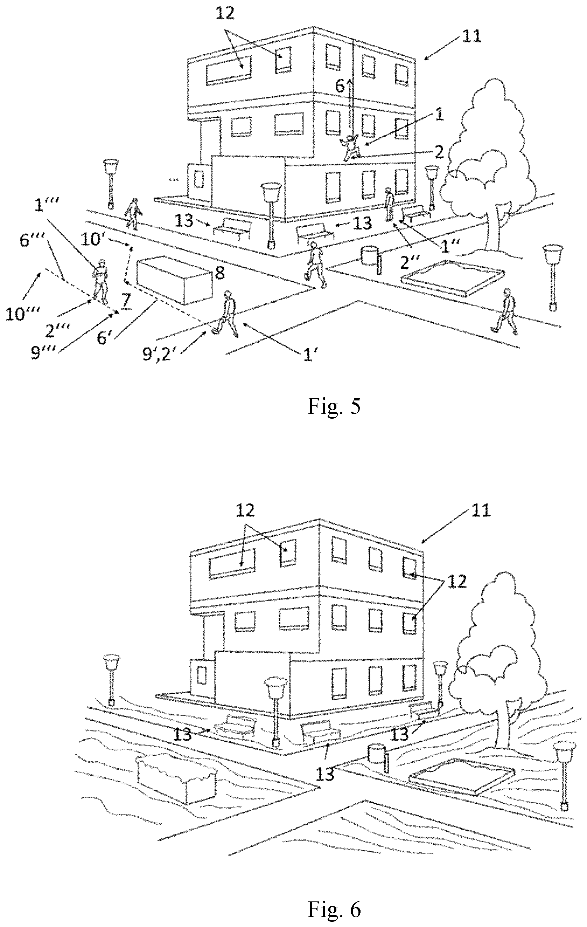

Die Figur 5 veranschaulicht eine durch die Simulationsdaten beschriebene Situation, wobei die Simulationsdaten eine hinreichend genaue Beschreibung des Bereiches mit dem Gebäude 11 und der bewegten Objekte umfassen. Das Abbild ist - wie oben erläutert - derart hinreichend genau, sodass eine die Simulationsdaten empfangende Alarmeinheit die durch die Simulationsdaten beschriebene Situation unter Anwendung von bekannten Verfahren klassifizieren kann.

Die Figur 5 umfasst das Abbild des Gebäudes 11, wie dieses Gebäude 11 in Figur 1 ohne Personen 1, 1', 1" dargestellt ist und in der Figurenbeschreibung zu Figur 1 erläutert ist.

Die Bildsensormodelldaten umfassen ein der Realität ähnliches, etwaige geometrische Verzerrungen berücksichtigendes Abbild des Gebäudes. Das Gebäude stellt im Wesentlichen den mit dem ersten Bildsensor zu überwachenden Bereich dar.

Das Abbild des Bereiches beziehungsweise des Gebäudes ist derart, dass die Größenverhältnisse des Bereiches korrekt wiedergegeben werden. Bei dem in Figur 5 dargestellten Ausführungsbeispiel des erfindungsgemäßen Verfahrens zeigt die Figur 5 den mit dem ersten Bildsensor zu überwachenden Bereich, welcher Bereich das Gebäude 11 mit Fenster 12 und weiters beispielsweise und somit nicht einschränkend Bänke 13 umfasst. Die Größenverhältnisse des Gebäudes 11, des Fensters 12 und der Bänke 13 zueinander entsprechen der Realität, wobei die perspektivische Verzerrung in Abhängigkeit der Bildsensoreigenschaften zu berücksichtigen ist.

Mit Hilfe des erfindungsgemäßen Verfahrens wird eine Situation zu der Weiterleitung an eine Alarmeinheit simuliert, wie dies im Rahmen der Offenbarung beschrieben ist, wobei eine virtuell von dem ersten Bildsensor aufgenommene Situation betrachtet wird. Nachdem Bildsensoren nach dem Stand der Technik auch zur Aufnahme von Situationen in Bereichen mit einer nur geringen Beleuchtung eingesetzt werden und die Bildsensoren bei einer solchen Verwendung auch nur Bilddaten mit Graustufen liefern können, können die Simulationsdaten auf Graustufen beschränkt sein, wie diese durch eine Wärmebildkamera erstellt werden können. Aus diesem Grund kann das Erfordernis der hinreichenden Genauigkeit der Simulationsdaten auf die Beschreibung des Bereiches und der Objekte in den richtigen Größenproportionen beschränkt sein.

Das Abbild des Bereiches kann weiters die Eigenschaften des Gebäudes 11 mit den Fenstern 12 und der Bänke 13 berücksichtigen. Das Gebäude 11, die Fenster 12 und die Bänke 13 können in den Bildsensormodelldaten die Farben aufweisen, welche Farben die erwähnten Objekte 11, 12, 13 in Realität aufweisen. Die Oberflächen der erwähnten Objekte 11, 12, 13 können die Oberflächeneigenschaften aufweisen, welche Oberflächeneigenschaften die erwähnten Objekte 11, 12, 13 in Realität aufweisen. Es sei hier beispielhaft und somit nicht einschränkend die spiegelnde Eigenschaft, die Temperatur und das wärmetechnische Verhalten der jeweiligen Oberflächen erwähnt.

Es ist die technische Aufgabe der hier diskutierten Erfindung, Simulationsdaten aus Bildsensormodelldaten und Objektbewegungsdaten zu erstellen. Die Simulationsdaten beschreiben eine Situation in dem Bereich als Bilddaten; bei einer Weiterleitung der Simulationsdaten an eine Alarmeinheit als ein Teil des erfindungsgemäßen Verfahrens kann die Situation als eine gewöhnliche Situation (keine Alarmsituation) oder als eine außergewöhnliche Situation (Alarmsituation) klassifiziert werden. Es können hierzu auf die Simulationsdaten nach dem Stand der Technik bekannte Verfahren wie Objekterkennung und/oder Tracking angewandt werden, um die Situation zu klassifizieren.

In einer analogen Weise wie die nach dem Stand der Technik bekannten Verfahren der Objekterkennung und/oder des Tracking direkt auf Bildsensordaten zur Klassifizierung einer durch den Bildsensor aufgenommenen Situation angewandt werden, werden diese Verfahren der Objekterkennung und/oder des Tracking auf die Simulationsdaten angewandt. Dies kann bedingen, dass die Bildsensordaten die virtuelle Situation hinreichend genau beschreiben, sodass diese Verfahren angewandt werden können.

Die Simulationsdaten können eine Situation zu einem Zeitpunkt beschreiben.

Die Simulationsdaten können eine über eine Zeitspanne andauernde Situation beschreiben.

Es werden Simulationsdaten aus den Bildsensormodelldaten und den Objektbewegungsdaten erstellt. Die Simulationsdaten umfassen Bilddaten.

Zur Erreichung der erforderlichen hinreichenden Genauigkeit ist es notwendig, dass das durch die Objektbewegungsdaten beschriebene Objekt der abzubildenden Realität entsprechend in das Bildsensormodell eingebettet wird.

Das Objekt kann unter Beachtung der Größenverhältnisse und unter Beachtung einer möglichen geometrischen Verzerrung in das Bildsensormodell eingebettet werden. Dies ist eine Aufgabe, welche der Fachmann ohne erfinderisches Zutun und unter Anwendung der gängigen Lehre, insbesondere der gängigen Lehre der darstellenden Geometrie erledigen kann.

Das Objekt kann unter Beachtung der Belichtungsverhältnisse in das Bildsensormodell eingebettet werden. Dies ist ebenso eine technische Aufgabe, welche technische Aufgabe der Fachmann unter Heranziehen der gängigen Lehre, insbesondere der Lehre der darstellenden Geometrie erledigen kann.

Bei dem in Figur 5 gezeigten Beispiel umfassen die Simulationsdaten Objektbewegungsdaten, welche die Personen 1, 1', 1" beschreiben. Es werden hierbei die Personen 1, 1', 1" aus der Vielzahl der in der Figur 5 eingetragenen Personen beispielhaft und somit nicht einschränkend herausgegriffen.

Es wird die Person 1 an dem ersten Ort 2 in dem Gebäude 11 in die Situation eingebettet; das Einbetten in die Situation erfolgt durch das Zusammenführen der Bildsensormodelldaten und der Objektbewegungsdaten beschreibend die Person 1 und die Bewegung der Person 1. Durch das Anordnen der Person 1 an dem ersten Ort 2 wird eine Situation geschaffen, welche Situation durch die nachgeschaltete Alarmsituation als gewöhnliche Situation oder als eine außergewöhnliche Situation klassifiziert werden kann.

Die Anordnung erfolgt so, dass der zweite Ort 3 der Person 1 (wie diese in Figur 2 dargestellt ist) und der erste Ort 2 der Person 1 in den durch die Figur 5 veranschaulichten Bilddaten ortsgleich sind.

Die Person 1 kann einem Bewegungspfad 6 folgen. Die Alarmeinheit kann unter Berücksichtigung der Anwesenheit der Person 1 an dem ersten Ort 1 und/oder unter Berücksichtigung der Bewegung der Person 1 die durch das Bildsensormodell und/oder die Person 1 und/oder durch den Bewegungspfad definierte Situation unter Anwendung der gängigen Lehre wie beispielsweise und somit ausschließlich der Objekterkennung als eine außergewöhnliche Situation oder gewöhnliche Situation klassifizieren. Die Bewegung der Person 1 als ganzes Objekt kann durch den Bewegungspfad 6 definiert sein. Die Bewegung der Person 1 kann weiters durch Teilbewegungen der Person 1 definiert sein.

Die Figur 5 zeigt die Person 1 als eine an der Fassade des Gebäudes 11 kletternde Person. Die Alarmeinheit kann diese Situation unabhängig von den weiteren Objektbewegungen als eine außergewöhnliche Situation klassifizieren.

Die Person 1' wird an einem weiteren ersten Ort 2' im Bereich eingebettet. Der zweite Ort 3' der Person 1' und der erste Ort 2' der Person 1' sind ortsgleich. Es wird wiederum durch das Einbetten der Person 1' an dem ersten Ort 2' und gegebenenfalls durch die Bewegung der Person 1' eine Situation geschaffen, welche Situation durch die Alarmeinheit wie oben beschrieben klassifizierbar ist. Die Bewegung der Person 1' kann durch den Bewegungspfad 6' definiert sein.

Die Person 1' sowie der Bewegungspfad 6' der Person 1' sind so definiert, wie dies in der Figurenbeschreibung zu Figur 3 dargelegt ist. Die Figur 5 umfasst ein Objekt in der Nähe der Person 1', welches Objekt eine gesperrte Zone 8 definiert. Um das die gesperrte Zone 8 definierende Objekt erstreckt sich die freie Zone. Eine weitere gesperrte Zone kann beispielsweise durch das Gebäude 11 oder durch weitere Personen oder durch weitere Objekte definiert sein. Im Rahmen der Offenbarung des erfindungsgemäßen Verfahrens sei angenommen, dass durch die Bildsensormodelldaten und die Objektbewegungsdaten für die Person 1' eine gewöhnliche Situation simuliert wird.

Die Person 1" wird an einem weiteren ersten Ort 2" im Bereich eingebettet. Der zweite Ort 3" der Person 1" und der erste Ort 2" der Person 1" sind ortsgleich. Es wird wiederum durch das Einbetten der Person 1" an dem ersten Ort 2" und gegebenenfalls durch die Bewegung der Person 1" eine Situation geschaffen, welche Situation durch die Alarmeinheit wie oben beschrieben klassifizierbar ist. Die Bewegung der Person 1" kann durch den Bewegungspfad 6" definiert sein. Im Rahmen der Offenbarung des erfindungsgemäßen Verfahrens sei angenommen, dass durch die Bildsensormodelldaten und die Objektbewegungsdaten für die nahe einer Bank 13 stehende Person 1" eine gewöhnliche Situation simuliert wird.

Die Person 1‴ wird an einem weiteren ersten Ort 2‴ im Bereich eingebettet. Der zweite Ort 3‴ der Person 1‴ und der erste Ort 2‴ der Person 1‴ sind ortsgleich. Es wird wiederum durch das Einbetten der Person 1‴ an dem ersten Ort 2‴ und gegebenenfalls durch die Bewegung der Person 1‴ eine Situation geschaffen, welche Situation durch die Alarmeinheit wie oben beschrieben klassifizierbar ist. Die Bewegung der Person 1‴ kann durch den Bewegungspfad 6‴ definiert sein. Das Einbetten der Person 1‴ in die durch die Figur 5 dargestellte Situation entspricht der Figurenbeschreibung zu Figur 4. Im Rahmen der Offenbarung des erfindungsgemäßen Verfahrens sei angenommen, dass durch die Bildsensormodelldaten und die Objektbewegungsdaten für die laufende Person 1‴ eine gewöhnliche Situation simuliert wird.

Die in Figur 5 gezeigte Situation umfasst sohin gewöhnliche Situationen und außergewöhnliche Situationen. Die Simulationsdaten können die einzelnen zu einer Situation zusammengefassten Situationen (wie dies in Figur 5 dargestellt) beschreiben. Die Simulationsdaten umfassen bei dieser Anwendung Bildsensormodelldaten und mehrere Objektbewegungsdaten.

Der Fachmann erkennt, dass die Simulationsdaten die Bildsensormodelldaten und Objektbewegungsdaten ein einziges Objekt und eine einzige Objektbewegung beschreiben können, was in Figur 5 nicht dargestellt ist. Der Benutzer des erfindungsgemäßen Verfahrens kann somit Situationen schaffen, welche Situationen der Benutzer mit der Alarmeinheit klassifizieren möchte.

Die Figur 6 zeigt die Ansicht der Figur 1, bei welcher Ansicht der Boden des Bereiches mit einer Schneeschicht versehen ist. Gleichsam wie die Figur 1 veranschaulicht die Figur 6 ein Bildsensormodell, welches Bildsensormodell in Form von Bildsensormodelldaten in die Simulationsdaten eingeht.

Eine mögliche Anwendung des erfindungsgemäßen Verfahrens kann sein, dass der Benutzer beispielhaft und somit nicht einschränkend die Funktionalität eines Alarmsystems zur Überwachung eines Bereiches ohne Schneelage und des Bereiches mit Schneelage überprüfen möchte. Der Benutzer kann erste Simulationsdaten unter einer Kombination von Bildsensormodelldaten gemäß Figur 1 mit den Objektbewegungsdaten und zweite Simulationsdaten unter Kombination von Bildsensormodelldaten gemäß Figur 6 mit den Objektbewegungsdaten erstellen und die ersten Simulationsdaten und die zweiten Simulationsdaten einander nachfolgend an die Alarmeinheit weiterleiten.

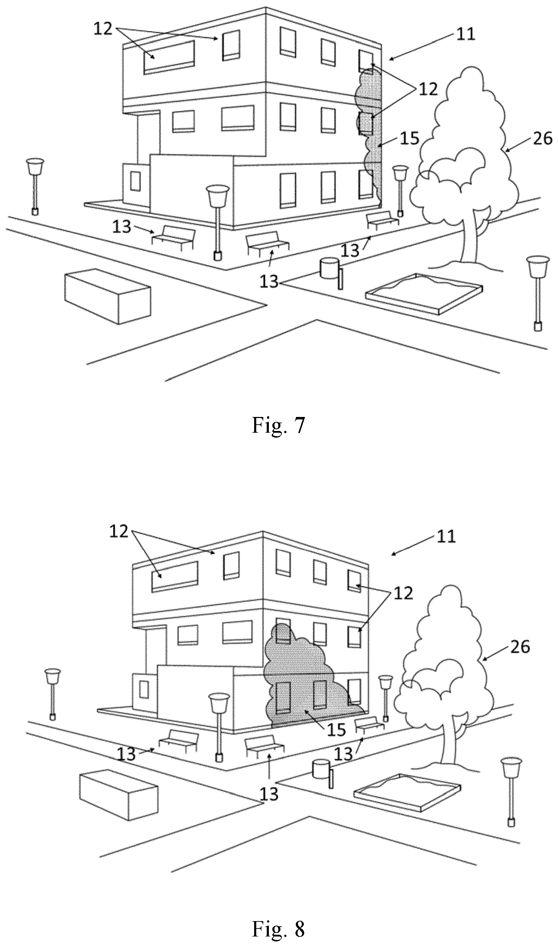

Die Figuren 7 und 8 zeigen eine unterschiedliche Belegung des Gebäudes 11 mit einem Schatten 15, wobei das Belegen des Gebäudes 11 mit einem Schatten 15 ein Problem ist, welches Problem der Fachmann unter Anwendung der gängigen Lehre, insbesondere der Lehre der darstellenden Geometrie lösen kann und im Rahmen der Offenbarung der Erfindung keine weitere Erklärung bedarf. Die Figuren 7 und 8 zeigen den Schatten des Baumes 26 auf das Gebäude 11.

Eine mögliche Anwendung des erfindungsgemäßen Verfahrens kann sein, dass der Benutzer beispielhaft und somit nicht einschränkend die Funktionalität eines Alarmsystems zur Überwachung eines Bereiches bei unterschiedlichen Schattenlagen überprüfen möchte. Der Benutzer kann erste Simulationsdaten unter einer Kombination von Bildsensormodelldaten gemäß Figur 7 mit den Objektbewegungsdaten und zweite Simulationsdaten unter Kombination von Bildsensormodelldaten gemäß Figur 8 mit den Objektbewegungsdaten erstellen und die ersten Simulationsdaten und die zweiten Simulationsdaten einander nachfolgend an die Alarmeinheit weiterleiten.

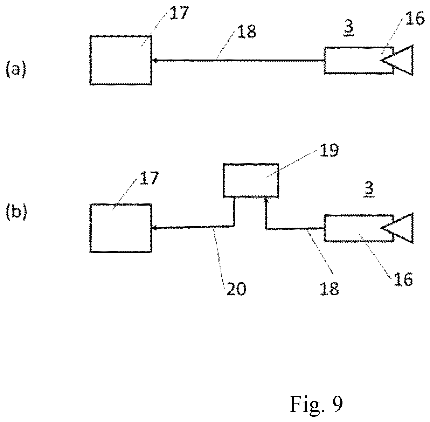

Beispielhaft und somit keinesfalls einschränkend kann die Schattenbildung auf dem Gebäude 11 als ein Umwelteinfluss angesehen werden. Die Simulationsdaten können um virtuelle Umgebungsdaten verändert werden oder es können die Simulationsdaten umfassend virtuelle Umgebungsdaten erstellt werden, welche Umgebungsdaten einen Umwelteinfluss auf den Sensorwirkungsbereich beschreiben. Die Figur 9(a) veranschaulicht die Funktionsweise von einem ersten Bildsensor 16 und einer Alarmeinheit 17 nach dem Stand der Technik. Es ist der erste Bildsensor 16 mit einem ersten Sensorwirkungsbereich an einem ersten Ort 3 angeordnet. Der erste Bildsensor 16 liefert erste Bilddaten 18 an die Alarmeinheit 17, welche Alarmeinheit 17 die ersten Bilddaten 18 in Hinblick auf Auftreten einer außergewöhnlichen Situation oder einer gewöhnlichen Situation klassifiziert. Die ersten Bilddaten 18 beschreiben die jeweilige Situation hinreichend genau, sodass bei der Klassifizierung der Situation Verfahren nach dem Stand der Technik wie beispielsweise eine Mustererkennung angewandt werden können.

Die Figur 9(b) veranschaulicht eine Ausführungsform des erfindungsgemäßen Verfahrens. Die vom ersten Bildsensor 16 aufgenommenen ersten Bilddaten 18 werden nicht zu der Alarmeinheit 17, sondern zu einer Rechnereinheit 19 zur Durchführung des erfindungsgemäßen Verfahrens geleitet. In der Rechnereinheit 19 werden Simulationsdaten 20 umfassend die vom ersten Bildsensor 16 erstellten ersten Bilddaten 18 und Objektbewegungsdaten erstellt. Es werden die Simulationsdaten 20 an die Alarmeinheit 17 weitergeleitet. Die Alarmeinheit 17 klassifiziert die durch die Simulationsdaten 20 beschriebene Situation als eine gewöhnliche Situation oder als eine außergewöhnliche Situation oder als eine unklassifizierbare Situation, wobei Verfahren nach dem Stand der Technik auf die Simulationsdaten 20 zur Klassifizierung der Simulationsdaten 20 angewandt werden. Die Alarmeinheit 17 kann unter Verweis auf die obige Beschreibung die Situation mittels Mustererkennung oder unter Anwendung von Verfahren basierend auf künstliche Intelligenz einsetzen. Die Simulationsdaten 20 sind hierzu Bilddaten.

## Patentansprüche

1. Computerimplementiertes Verfahren zu einer Ermittlung,
ob ein Alarmsystem eine außergewöhnliche Situation als eine solche Situation erkennt und gegebenenfalls ein Alarmsignal auslöst, welcher erster Bildsensor ein virtueller Sensor ist und einen virtuellen Sensorwirkungsbereich hat und
welcher Sensorwirkungsbereich einen ersten Ort umfasst,
wobei aus Eingabedaten wie Plänen eines Bereiches Bildsensormodelldaten erstellt werden, welche Bildsensormodelldaten zumindest den virtuellen Sensorwirkungsbereich des ersten Bildsensors in Form eines dreidimensionalen Modells beschreiben,
wobei in einer Recheneinheit Simulationsdaten als Bilddaten umfassend die Bildsensormodelldaten und Objektbewegungsdaten einer Person (1) als ein Objekt erstellt werden,
wobei die Bildsensormodelldaten frei von der bewegten Person (1) sind,
wobei die eine Zeitspanne andauernden Objektbewegungsdaten zu einem zweiten Zeitpunkt erstellte Bilddaten über eine mittels eines realen zweiten Bildsensors ermittelte reale Bewegung der Person (1) an einem zweiten Ort oder eine virtuelle Bewegung der Person an einem virtuellen zweiten Ort umfassen,
**dadurch gekennzeichnet, dass**
die Objektbewegungsdaten die Bewegung der Person (1) durch einzelne Bewegungen ausgewählter Teilbereiche der Person (1) wie der Arme, der Beine, des Kopfes beschreiben,
wobei die entweder ein gewöhnliches Ereignis oder als ein außergewöhnliches Ereignis beschreibenden Simulationsdaten an eine Bilddaten verarbeitende Alarmeinheit weitergeleitet werden,
wobei in der Alarmeinheit die durch die die Bildsensormodelldaten und die Objektbewegungsdaten umfassenden Simulationsdaten beschriebene und in dem Sensorwirkungsbereich stattfindende Situation als ein gewöhnliches Ereignis beziehungsweise als ein außergewöhnliches Ereignis unter Einsatz von Mustererkennungsverfahren und/oder Objekterkennungsverfahren klassifiziert wird, wobei die Objektbewegungsdaten unter Berücksichtigung der einzelnen Bewegungen der Teilbereiche der Person klassifiziert werden,
welches Alarmsystem bei einem außergewöhnlichen Ereignis ein Alarmsignal ausgibt, sodass anhand des ausgegebenen Alarmsignals überprüfbar ist, ob ein Alarmsystem bei Simulationsdaten, welche Simulationsdaten ein außergewöhnliches Ereignis umfassen, ein Alarmsignal auslöst.

2. Computerimplementiertes Verfahren zu einer Ermittlung,
ob ein Alarmsystem eine außergewöhnliche Situation als eine solche Situation erkennt und ein gegebenenfalls Alarmsignal auslöst,
welcher erster Bildsensor ein realer Bildsensor ist und einen realen Sensorwirkungsbereich hat und
welcher erster Bildsensor real erfasste Bildsensordaten als Bilddaten über den Sensorwirkungsbereich zu einem ersten Zeitpunkt ausgibt,
welcher Sensorwirkungsbereich einen ersten Ort umfasst,
wobei in der Recheneinheit Simulationsdaten als Bilddaten umfassend die Bildsensordaten und virtuelle Objektbewegungsdaten einer Person (1) als ein Objektes erstellt werden,
wobei die Bildsensordaten frei von der bewegten Person (1) sind,
wobei die eine Zeitspanne andauernden Objektbewegungsdaten zu einem zweiten Zeitpunkt erstellte Bilddaten über eine mittels eines zweiten Bildsensors ermittelte reale Bewegung der Person (1) an einem zweiten Ort oder eine virtuelle Bewegung der Person (1) an einem virtuellen zweiten Ort umfassen,
**dadurch gekennzeichnet, dass**
die Objektbewegungsdaten die Bewegung der Person (1) durch einzelne Bewegungen ausgewählter Teilbereiche der Person (1) wie der Arme, der Beine oder des Kopfes beschreiben,
wobei die entweder ein gewöhnliches Ereignis oder als ein außergewöhnliches Ereignis darstellende Simulationsdaten an eine Bilddaten verarbeitende Alarmeinheit weitergeleitet werden, wobei in der Alarmeinheit eine durch die die Bildsensormodelldaten und die Objektbewegungsdaten umfassenden Simulationsdaten beschriebene Situation als ein gewöhnliches Ereignis oder als ein außergewöhnliches Ereignis unter Einsatz von Mustererkennungsverfahren und/oder Objekterkennungsverfahren klassifiziert wird,
wobei die Objektbewegungsdaten unter Berücksichtigung der einzelnen Bewegungen der Teilbereiche der Person klassifiziert werden,
welches Alarmsystem bei einem außergewöhnlichen Ereignis ein Alarmsignal ausgibt, sodass anhand des ausgegebenen Alarmsignals überprüfbar ist, ob ein Alarmsystem bei Simulationsdaten, welche Simulationsdaten ein außergewöhnliches Ereignis umfassen, ein Alarmsignal auslöst.

3. Verfahren nach Anspruch 1, **dadurch gekennzeichnet, dass**
ein einziges Bildsensormodell zur Erstellung von einer Vielzahl von unterschiedlichen Simulationsdaten verwendet wird,
welche Simulationsdaten unterschiedliche Objektbewegungsdaten umfassen und/oder welche Simulationsdaten unterschiedliche Bildsensormodelldaten umfassen.

4. Verfahren nach einem der Ansprüche 1 bis 3, **dadurch gekennzeichnet, dass**
die in das Verfahren eingehende Zeitspanne der Objektbewegungsdaten zu einer realen Zeitspanne der Objektbewegung unterschiedlich ist.

## Claims

1. A computer-implemented method of determining
whether an alert system recognises an unusual situation as such and, if required, triggers an alert signal, which first image sensor is a virtual sensor and has a virtual sensor range, and
which sensor range comprises a first location,
wherein image sensor model data is generated from input data such as maps of an area, which image sensor model data describes at least the virtual sensor range of the first image sensor in the shape of a three-dimensional model,
wherein simulation data as image data comprising the image sensor model data and object movement data of a person (1) as an object is generated in a calculating unit,
wherein the image sensor model data is devoid of the moved person (1),
wherein the object movement data continuing for a timespan comprises image data generated at a second time, of a real movement of the person (1) at a second location determined using a real second image sensor or a virtual movement of the person at a virtual second location, **characterised in that**,
the object movement data describes the movement of the person (1) by individual movements of selected subareas of said person (1), such as their arms, legs, head,
wherein the simulation data describing either a common event or an unusual event is forwarded to an alert unit processing image data,
wherein, in the alert unit, the situation described by the simulation data comprising the image sensor model data and the object movement data and taking place in the sensor range is classified either as a common event or as an unusual event by using pattern recognition methods and/or object recognition methods, wherein the object movement data is classified in consideration of the individual movements of the person's subareas,
which alert system issues an alert signal in the case of an unusual event,
allowing verification based on the alert signal issued as to whether an alert system triggers an alert signal in the case of simulation data which comprises an unusual event.

2. A computer-implemented method of determining
whether an alert system recognises an unusual situation as such and, if required, triggers an alert signal,
which first image sensor is a real image sensor and has a real sensor range, and
which first image sensor issues image sensor data captured in reality as image data of the sensor range at a first time,
which sensor range comprises a first location,
wherein simulation data as image data comprising the image sensor data and virtual object movement data of a person (1) as an object is generated in a calculating unit,
wherein the image sensor data is devoid of the moved person (1),
wherein the object movement data continuing for a timespan comprises image data generated at a second time using a second image sensor, of a real movement of the person (1) at a second location determined using a second image sensor or a virtual movement of the person (1) at a virtual second location,
**characterised in that**,
the object movement data describes the movement of the person (1) by individual movements of selected subareas of said person (1), such as their arms, legs or head,
wherein the simulation data representing either a common event or an unusual event is forwarded to an alert unit processing image data,
wherein, in the alert unit, a situation described by the simulation data comprising the image sensor model data and the object movement data is classified either as a common event or as an unusual event by using pattern recognition methods and/or object recognition methods,
wherein the object movement data is classified in consideration of the individual movements of the person's subareas,
which alert system issues an alert signal in the case of an unusual event,
allowing verification based on the alert signal issued as to whether an alert system triggers an alert signal in the case of simulation data which comprises an unusual event.

3. The method of claim 1, **characterised in that**
a single image sensor model is used to generate a plurality of different simulation data, which simulation data comprises different object movement data and/or which simulation data comprises different image sensor model data.

4. The method of any one of claims 1 to 3, **characterised in that**
the timespan of the object movement data included in the method is different from a real timespan of the object movement.

## Revendications

1. Procédé mis en œuvre par ordinateur pour déterminer
si un système d'alarme reconnaît une situation exceptionnelle comme une telle situation et, le cas échéant, déclenche un signal d'alarme, lequel premier capteur d'images est un capteur virtuel et a une portée de capteur virtuelle qui comprend un premier endroit,
dans lequel, à partir de données d'entrée telles que des plans d'une zone, des données de modèle de capteur d'image sont créées,
lesdites données de modèle de capteur d'image décrivant au moins la portée de capteur virtuelle du premier capteur d'image sous la forme d'un modèle tridimensionnel,
des données de simulation étant créées, dans une unité de calcul, en tant que données d'image comprenant les données de modèle de capteur d'image et les données de mouvement d'objet d'une personne (1) en tant qu'objet,
les données de modèle de capteur d'image étant exemptes de la personne en mouvement (1), les données de mouvement d'objet, qui durent une période de temps, comprenant des données d'image créées à un deuxième moment concernant un mouvement réel de la personne (1) à un deuxième endroit, déterminé au moyen d'un deuxième capteur d'image réel, ou un mouvement virtuel de la personne à un deuxième endroit virtuel,
**caractérisé en ce que**
les données de mouvement d'objet décrivent le mouvement de la personne (1) par des mouvements individuels de parties sélectionnées de la personne (1) telles que les bras, les jambes, la tête,
les données de simulation décrivant soit un événement ordinaire soit un événement exceptionnel étant transmises à une unité d'alarme traitant des données d'image,
la situation décrite par les données de simulation comprenant les données de modèle de capteur d'image et les données de mouvement d'objet et se produisant dans la portée de capteur étant classée, dans l'unité d'alarme, comme un événement ordinaire ou comme un événement exceptionnel, respectivement, en utilisant des procédés de reconnaissance de formes et/ou des procédés de reconnaissance d'objets,
les données de mouvement d'objet étant classifiées en tenant compte des mouvements individuels des parties de la personne,
ledit système d'alarme émettant un signal d'alarme en cas d'événement exceptionnel,
de sorte qu'il est possible de vérifier, à l'aide du signal d'alarme émis, si un système d'alarme déclenche un signal d'alarme pour des données de simulation, qui comprennent un événement exceptionnel.

2. Procédé mis en œuvre par ordinateur pour déterminer
si un système d'alarme reconnaît une situation exceptionnelle comme une telle situation et, le cas échéant, déclenche un signal d'alarme,
lequel premier capteur d'image est un capteur d'image réel et a une portée de capteur réelle et lequel premier capteur d'image délivre des données de capteur d'image réellement détectées en tant que données d'image sur la portée de capteur à un premier moment,
ladite portée de capteur comprenant un premier endroit,
des données de simulation étant créées, dans l'unité de calcul, en tant que données d'image comprenant les données de capteur d'image et les données de mouvement d'objet d'une personne (1) en tant qu'objet,
les données de capteur d'image étant exemptes de la personne en mouvement (1),
les données de mouvement d'objet, qui durent une période de temps, comprenant des données d'image créées à un deuxième moment concernant un mouvement réel de la personne (1) à un deuxième endroit, déterminé au moyen d'un deuxième capteur d'image, ou un mouvement virtuel de la personne (1) à un deuxième endroit virtuel,
**caractérisé en ce que**
les données de mouvement d'objet décrivent le mouvement de la personne (1) par des mouvements individuels de parties sélectionnées de la personne (1) telles que les bras, les jambes ou la tête, les données de simulation décrivant soit un événement ordinaire soit un événement exceptionnel étant transmises à une unité d'alarme traitant des données d'image,
une situation décrite par les données de simulation comprenant les données de modèle de capteur d'image et les données de mouvement d'objet, dans l'unité d'alarme, comme un événement ordinaire ou comme un événement exceptionnel, en utilisant des procédés de reconnaissance de formes et/ou des procédés de reconnaissance d'objets,
les données de mouvement d'objet étant classifiées en tenant compte des mouvements individuels des parties de la personne,
ledit système d'alarme émettant un signal d'alarme en cas d'événement exceptionnel,
de sorte qu'il est possible de vérifier, à l'aide du signal d'alarme émis, si un système d'alarme déclenche un signal d'alarme pour des données de simulation, qui comprennent un événement exceptionnel.

3. Procédé selon la revendication 1, **caractérisé en ce que**
un seul modèle de capteur d'image est utilisé pour créer une pluralité de données de simulation différentes,
lesdites données de simulation comprenant différentes données de mouvement d'objet et/ou lesdites données de simulation comprenant différentes données de modèle de capteur d'image.

4. Procédé selon l'une des revendications 1 à 3, **caractérisé en ce que**
la période de temps des données de mouvement de l'objet entrant dans le procédé est différente d'une période de temps réelle du mouvement de l'objet.
